# EUROPEAN PATENT APPLICATION

(11) **EP 1 209 599 A2**
(43) Date of publication of application: **29.05.2002**
(21) Application number: 01127836.3
(22) Date of filing: 22.11.2001
(51) Int. Cl.: G06F 17/60, G06F 17/30

(54) **Group forming system, group forming apparatus, group forming method, program, and medium**

(30) Priority: 22.11.2000 JP 2000355405
(71) Applicant: MATSUSHITA ELECTRIC INDUSTRIAL CO., LTD., Kadoma-shi, Osaka 571-8501 (JP)
(72) Inventor: Kudo, Takahiro, Kadoma-shi, Osaka 571-0064 (JP); Matsuura, Satoshi, Kyotanabe-shi, Kyoto 610-0331 (JP); Ozawa, Jun, Nara-shi, Nara 631-0005 (JP)
(74) Representative: Grünecker, Kinkeldey, Stockmair & Schwanhäusser Anwaltssozietät

(57) **Abstract**

A group forming system has
a terminal apparatus which is connected to a network;
accumulating means of obtaining information including at least one of personal information and preference information of a user of the terminal apparatus, and of accumulating the obtained information;
classifying means of classifying a whole or a part of the information accumulated in the accumulating means, into a single or plural groups on the basis of a predetermined classification criterion; and
determining and notifying means of determining the group to which the user is to belong, from the classified groups on the basis of predetermined relationships between the user and the accumulated information, and of notifying the user of a result of the determination.

## Description

### BACKGROUND OF THE INVENTION

### Field of the Invention

The present invention relates to a group forming system, a group forming apparatus, a group forming method, a program, and a medium which are used for forming a group (hereinafter, often referred to as community) on the Internet in which plural users exchange information.

### Related Art of the Invention

At present, on the Internet, there are a large number of so-called communities such as bulletin boards and mailing lists in which general users exchange information. A user uses a search service through a browser to conduct a search while inputting a keyword of the user's interest. Then, the user reads information of a Web page which is obtained as a result of the search. If there is a community such as a bulletin board or a mailing list in the page, the user joins the community. Alternatively, a user may obtain information of such a community from a friend or an acquaintance, and then join the community.

Japanese Patent Publication (Kokai) No. 2000-76307 discloses a technique in which a terminal on the side of a user monitors actions of the user on the Internet and automatically produces profile information of the user, and, when the user searches for information, filtering is performed on a result of the search by using the profile information. According to the technique, selection of information is automated by using profile information.

In the conventional art, however, formation and operation of such a community are not automated, but manually performed.

Specifically, in order to manage a community, the following actions must be performed:
1. Creation of a community
2. Collection of members
3. Operation of the community

In the operation of the community, it is required to take measures for monitoring arguments in the community are monitored, deleting an inadequate message, and, when the community enters an inactivated state, activating the community. In the present state, these actions are manually performed, and very cumbersome.

By contrast, a user wishes to find a community of the user's interest by means of searching. However, a community suitable to the user cannot be always found depending on the skill of searching, and, even when the user has once joined a community, the user may feel that the community is not suitable to the user. In such a case, the user must again conduct a similar searching work, thereby producing a problem in that such a work is cumbersome.

### SUMMARY OF THE INVENTION

In view of the problems of the conventional art, it is an object of the invention to provide a group forming system, a group forming apparatus, a group forming method, a program, and a medium which enable for example formation, operation, and activation of a community on the Internet to be performed in a manner which is not cumbersome as compared with the conventional art.

The 1st invention of the present invention is a group forming system comprising:
a terminal apparatus which is connected to a network;
accumulating means of obtaining information including at least one of personal information and preference information of a user of said terminal apparatus, and of accumulating the obtained information;
classifying means of classifying a whole or a part of the information accumulated in said accumulating means, into a single or plural groups on the basis of a predetermined classification criterion; and
determining and notifying means of determining the group to which the user is to belong, from the classified groups on the basis of predetermined relationships between the user and the accumulated information, and of notifying the user of a result of the determination.

The 2nd invention of the present invention is a group forming apparatus comprising:
accumulating means of obtaining information including at least one of personal information and preference information of a user of a terminal apparatus which is connected to a network, and of accumulating the obtained information;
classifying means of classifying a whole or a part of the information accumulated in said accumulating means, into a single or plural groups on the basis of a predetermined classification criterion; and
determining and notifying means of determining the group to which the user is to belong, from the classified groups on the basis of predetermined relationships between the user and the accumulated information, and of notifying the user of a result of the determination.

According to the configuration, while the user of the terminal apparatus ordinarily exchanges mails or browses the Web by using the terminal apparatus, for example, information indicating the preference of the user is extracted. The extracted information is transmitted to the server to be centrally managed thereby. From preference information of plural users, therefore, a conceptual structure is automatically constructed in accordance with similarity of the information, and a certain constructed concept is configured as a community, whereby formation of a community and allocation of members can be automatically performed.

According to the configuration, furthermore, profile information of high confidentiality such as the hobby and preference of the user can be managed by the server without being disclosed to a third person.

The 3rd invention of the present invention is a group forming apparatus according to 2nd invention, wherein said apparatus further comprises activity judging means of judging a degree of activity of the group on the basis of a history and/or a frequency of postings of information to the group from the user belonging to the group, and
from a result of the judgement, it is determined whether a whole or a part of the classification is reorganized or not, in accordance with the degree of activity of the group.

According to the configuration, in the case where exchanges of views which are the proper object of the community are not performed because the discussion is exhausted or members are uncongenial, for example, the community can be reorganized.

The 4th invention of the present invention is a group forming apparatus according to 2nd invention, wherein said apparatus further comprises:
keyword judging means of judging whether or not a preregistered keyword is included in information which is posted to the group from the user belonging to the group; and
provided information providing means of, if a result of the judgement shows that the keyword is included, providing provided information which is previously stored with being paired with the keyword, to the group or the user posting the information to the group, on the basis of a predetermined criterion.

According to the configuration, with respect to a keyword which is one of keywords posted to the community, and which seems to be difficult to understand for most people, for example, explanation information of the keyword can be presented to the community, or an enterprise or an organization having information which is to be known or advertised to a member posting the keyword can provide the information for the member.

The 5th invention of the present invention is a group forming apparatus according to 2nd invention, wherein said apparatus further comprises monitoring means of monitoring plural sets of information which are posted to the group from the user belonging to the group, and
in accordance with similarity of the plural sets of monitored information, the group is divided, or plural groups are integrated with each other.

According to the configuration, for example, communities in which views on similar subjects are exchanged can be integrated with each other. In the case where, even in the same community, views of different subjects are exchanged among members, the community can be divided so that a new community is configured by members discussing similar subjects.

The 6th invention of the present invention is a group forming apparatus according to 2nd invention, wherein said apparatus further comprises:
advertisement content storing means of storing an advertisement content for providing an advertisement to the group, and conditions for the provision in correspondence with one another;
history/frequency storing means of storing a history and/or a frequency of information posted to the group from the user belonging to the group; and
advertisement content providing means of searching contents stored in said history/frequency storing means for contents satisfying the conditions, and of providing the corresponding advertisement content to a user belonging to the group, or the group.

According to the configuration, for example, an enterprise which wishes to display an advertisement can designate conditions so as to select a community to which the advertisement is to be displayed. Therefore, an effective advertisement is enabled.

The 7th invention of the present invention is a group forming method comprising;
an accumulating step of obtaining information including at least one of personal information and preference information of a user of a terminal apparatus, and of accumulating the obtained information;
a classifying step of classifying a whole or a part of the accumulated information into a single or plural groups on the basis of a predetermined classification criterion; and
a determining and notifying step of determining a group to which the user is to belong, from the classified groups on the basis of predetermined relationships between the user and the accumulated information, and of notifying the user of a result of the determination.

The 8th invention of the present invention is a group forming method according to 7th invention, wherein, in said accumulating step, also information related to the classified groups is accumulated, and
in said classifying step, the classification is performed in consideration of also the accumulated information related to the groups.

The 9th invention of the present invention is a group forming method comprising:
a storing step of storing personal information or preference information of a user belonging to a group which is formed on Internet, with classifying the information into first information which shows a stable tendency for a predetermined time period, and second information which, for the predetermined time period, shows a degree of change in tendency that is larger than a degree of change in tendency of the first information;
a classification result obtaining step of, on the basis of a first classification criterion, classifying a whole or a part of information including the first information in the stored information, into a single or plural groups to obtain a first classification result, and of, on the basis of a second classification criterion, classifying a whole or a part of information including the second information, into a single or plural groups to obtain a second classification result; and
a determining and notifying step of determining the group by using the first classification result, of determining the group by using the second classification result, and of notifying the user of results of the determinations.

According to the configuration, for example, long-term preference information in which the user has been lastingly interested, and short-term information in which the user is interested because it is the talk of the town are used in formation of a conceptual structure, thereby allowing users to be allocated to communities in accordance with their respective preference information.

The 10th invention of the present invention is a group forming method comprising:
an activity judging step of judging a degree of activity of a group which is formed on Internet, on the basis of a history and/or a frequency of postings of information to the group from a user belonging to the group;
a determining step of, from a result of the judgement, determining whether a whole or a part of single or plural groups is reorganized or not, in accordance with the degree of activity of the group; and
a reorganizing step of reorganizing the groups on the basis of a result of the determination.

According to the configuration, in the case where exchanges of views which are the proper object of the community are not performed because the discussion is exhausted or members are uncongenial, for example, the community can be reorganized.

The 11th invention of the present invention is a group forming method comprising:
a judging step of judging whether or not a preregistered keyword is included in information which is posted to a group that is formed on Internet; and
a providing step of, if a result of the judgement shows that the keyword is included, providing provided information which is previously stored with being paired with the keyword, to the group or a user posting the information to the group, on the basis of a predetermined criterion.

According to the configuration, with respect to a keyword which is one of keywords posted to the community, and which seems to be difficult to understand for most people, for example, explanation information of the keyword can be presented to the community, or an enterprise or an organization having information which is to be known or advertised to a member posting the keyword can provide the information for the member.

The 12th invention of the present invention is a group forming method according to 11th invention, wherein the provision of the provided information on the basis of the predetermined criterion includes the steps of: on the basis of at least one of personal information and preference information of a user belonging to the group, judging whether the user has known the keyword or not; and, if it is judged that the user has not yet known the keyword, providing the provided information.

According to the configuration, when a certain keyword is posted, for example, a profile of a member such as preference information is referred, whereby explanation information can be presented only to a user who seems to be unfamiliar to the keyword.

The 13th invention of the present invention is a group forming method comprising:
a monitoring step of monitoring plural sets of information posted to a group which is formed on Internet; and
a step of, in accordance with similarity of the plural sets of information, automatically dividing a mass, or integrating plural masses together.

According to the configuration, for example, communities in which views on similar subjects are exchanged can be integrated with each other. In the case where, even in the same community, views of different subjects are exchanged among members, the community can be divided so that a new community is configured by members discussing similar subjects.

The 14th invention of the present invention is a group forming method comprising the steps of:
previously storing an enterprise which wishes to display an advertisement to a mass, an advertisement content which the enterprise wishes to display, and conditions for displaying the advertisement with being paired with each other;
storing a history of information posted to a group which is formed on Internet; and
if the history of posted information satisfies the conditions for displaying the advertisement, providing the advertisement content to the group.

According to the configuration, for example, an enterprise which wishes to display an advertisement can designate conditions so as to select a community to which the advertisement is to be displayed. Therefore, an effective advertisement is enabled.

The 15th invention of the present invention is a group forming method according to 14th invention, wherein the history of posted information is stored in the form of a pair of a keyword and the number of postings of the keyword.

The 16th invention of the present invention is a group forming method according to 14th invention, wherein the condition is a keyword and a lower limit of the number of postings of the keyword to the group,
the history of posted information is stored in the form of a pair of a keyword and the number of postings of the keyword, and
satisfaction of the condition is that a keyword which is the history of posted information and the number of postings of the keyword satisfy the condition.

The 17th invention of the present invention is a program for causing a computer to function as a whole or a part of said accumulating means, said classifying means, and said determining and notifying means of said group forming apparatus according to 2nd invention.

The 18th invention of the present invention is a program for causing a computer to perform a whole or a part of said steps of said group forming method according to any one of 7th to 16th inventions.

The 19th invention of the present invention is a medium which carries a program for causing a computer to function as a whole or a part of said accumulating means, said classifying means, and said determining and notifying means of said group forming apparatus according to 2nd invention, said medium being processable by a computer.

The 20th invention of the present invention is a medium which carries a program for causing a computer to perform a whole or a part of said steps of said group forming method according to any one of 7th to 16th inventions, said medium being processable by a computer.

As described above, according to the configuration, on the basis of profile information which is automatically collected, and which relates to preference, interest, and purchase of users, for example, communities can be automatically created in accordance with the similarity, and members can be allocated to the communities.

The activation state of a community is judged on the basis of the state of postings by members. If the state is inactive, or when communities are in a state where a more suitable community can be created, communities can be appropriately reorganized.

Although a community handles profile information of high confidentiality, it is possible to prevent the information from leaking to a third person, thereby enabling privacy of a member to be guarded.

### [Brief Description of the Drawings]

Fig. 1 is a system diagram of an embodiment.
Fig. 2 is a diagram of an information terminal in the embodiment.
Fig. 3 is a flowchart of production of preference information in the information terminal.
Fig. 4 is a view showing a language data.
Fig. 5 is a view showing a result of a morphological analysis performed on the language data.
Fig. 6 is a view showing extracted nouns.
Fig. 7 is a view showing a preference history data.
Fig. 8 is a view showing the updated preference history data.
Fig. 9 is a view showing a personal information data.
Fig. 10 is a view showing a preference information data.
Fig. 11 is a view showing the format of a transmission data.
Fig. 12 is a view showing a data for producing a transmission data.
Fig. 13 is a view showing a tagged preference information data.
Fig. 14 is a view showing a procedure of producing a signature.
Fig. 15 is a view showing a transmission data in the information terminal, and a received data in a community server.
Fig. 16 is a diagram of the community server.
Fig. 17 is a flowchart of an authentication procedure.
Fig. 18 is a view showing a data of a method database.
Fig. 19 is a view showing the authentication procedure.
Fig. 20 is a view showing a registered user data.
Fig. 21 is a conceptual diagram of clustered categories.
Fig. 22A is a view showing a clustering operation (new preference information is added into each existing categories).
Fig. 22B is a view showing a clustering operation (a new category is created in the same level as existing categories).
Fig. 23A is a view showing a clustering operation (integration of categories).
Fig. 23B is a view showing a clustering operation (separation of a category).
Fig. 24 is a diagram of a community server in Embodiment 3.
Fig. 25 is a view showing a data stored in a preference history database.
Fig. 26 is a view showing preference information which is produced with reflecting a preference history.
Fig. 27 is a diagram of a community server in Embodiment 4.
Fig. 28 is a view showing a degree-of-activity judgement criterion.
Fig. 29 is a diagram of a community server in Embodiment 5.
Fig. 30 is a view showing information which is posted by a user to a community.
Fig. 31 is a view showing an example of a data which is stored in a provided-information storage database.
Fig. 32 is a view showing another example of the data which is stored in the provided-information storage database.
Fig. 33 is a diagram of a community server in Embodiment 6.
Fig. 34 is a view showing a data which is stored in a keyword storage database.
Fig. 35 is a view showing a data which is stored in an advertiser database.
Fig. 36 is a diagram of a community server in Embodiment 7.
Fig. 37 is a view showing an example of information which is posted to a community.
Fig. 38 is a view showing a tree-structure data expressing concepts of terms.
Fig. 39A and Fig.39B are views showing explanation formation of terms displayed in a community site.
Fig. 40 is a diagram of a community server in Embodiment 8.
Fig. 41 is a view showing a conceptual tree structure of terms, and keywords featuring the terms.
Fig. 42 is a view showing an example of a data stored in a community similarity storing section.
Fig. 43 is a view showing an example of information which is posted to a community site.
Fig. 44 is a view showing another example of a data stored in the community similarity storing section.
Fig. 45 is a diagram of a community server in Embodiment 9.
Fig. 46 is a view showing an example of a data stored in a keyword storing section.
Fig. 47 is a view showing an example of information which is posted to the community site.
Fig. 48 is a view showing an example of a data stored in the keyword storing section.
Fig. 49 is a view showing an example of a portal site of a community.

### Reference Numerals and Signs

- 101: Internet
- 102: user 1
- 103: information terminal 1
- 104: user 2
- 105: information terminal 2
- 106: community server
- 197: service provider
- 108: advertiser
- 201: browser
- 202: language processing section
- 203: feature extracting section
- 204: personal information database
- 205: preference history storage database
- 206: preference producing section
- 207: transmission data producing database
- 208: key database
- 209: signature section
- 210: transmission data producing section
- 211: data transmitting section
- 301: morpheme analyzing step
- 302: noun extracting step
- 303: noun word selecting step
- 304: history referring step
- 305: occurred and existing noun checking step
- 306: frequency of occurrence adding step
- 307: term registering step
- 308: frequency of occurrence registering step
- 309: other noun existence confirming step
- 310: weight calculating step
- 311: history updating step
- 312: personal information providing step
- 401: language data
- 501: morphological analysis result
- 601: noun extraction data
- 701: preference history data
- 801: updated preference history data
- 901: personal information data
- 1001: preference information
- 1101: transmission data format
- 1102: Profile description part
- 1103: Action description part
- 1104: Contents description part
- 1201: detailed item of Profile
- 1202: detailed item of Action
- 1301: tagged preference information data
- 1401: key producing section
- 1402: private key
- 1403: public key
- 1491: Signature
- 1405: transmission data
- 1601: data receiving section
- 1602: authentication rule storage database
- 1603: method database
- 1604: registrant information management database
- 1605: data authenticating section
- 1606: preference information extracting section
- 1607: classification concept database
- 1608: preference accumulation database
- 1609: classifying section
- 1610: classification information transmitting section
- 1701: data receiving step
- 1702: signature matching confirming step
- 1703: format matching confirming step
- 1704: registrant identifying step
- 1705: error processing step
- 1706: preference information obtaining step
- 1801: signature authentication method
- 1802: format authentication method
- 1803: user information authentication method
- 1804: preference information extraction method
- 1901: format that received data should have
- 1902: user data
- 2101: one example of nodes indicating branches of clustering
- 2102: one example of category of clustering
- 2103: category of clustering
- 2201: operation of adding to current category
- 2202: operation of newly creating category
- 2301: operation of integrating categories
- 2302: operation of separating category
- 2401: preference history database
- 2402: preference history reflection data producing section
- 2501: data showing change of preference of certain user
- 2601: preference information data which is produced by reflecting history
- 2701: activity judging section
- 2702: posted-information storage database
- 2801: degree-of-activity judgement criterion
- 2901: posted-information monitoring section
- 2902: provided-information storage database
- 2903: keyword matching section
- 2904: provided-information displaying section
- 3001: data posted by user
- 3101: example of data of provided-information storage database
- 3201: example of data of provided-information storage database
- 3301: data of keyword storage database
- 3302: keyword adding section
- 3303: data of advertiser database
- 3304: advertisement display judging section
- 3305: advertisement displaying section
- 3401: data of keyword storage database before incrementation
- 3402: data of keyword storage database after incrementation
- 3501: data of advertiser database
- 3601: display information determining section
- 3602: concept storage database
- 3603: profile managing section
- 3604: explanation information storage database
- 4001: posted-information storage database 1
- 4002: posted-information storage database 2
- 4003: posted-information storage database N
- 4004: conceptual structure database
- 4005: posted-information extracting section
- 4006: community similarity adding section
- 4007: community similarity storing section
- 4008: similar-community judging section
- 4501: posted-information storage database
- 4502: keyword adding section
- 4503: keyword storing section
- 4504: independent-community judging section

### PREFERRED EMBODIMENTS OF THE INVENTION

Hereinafter, embodiments of the invention will be described with reference to the accompanying drawings.

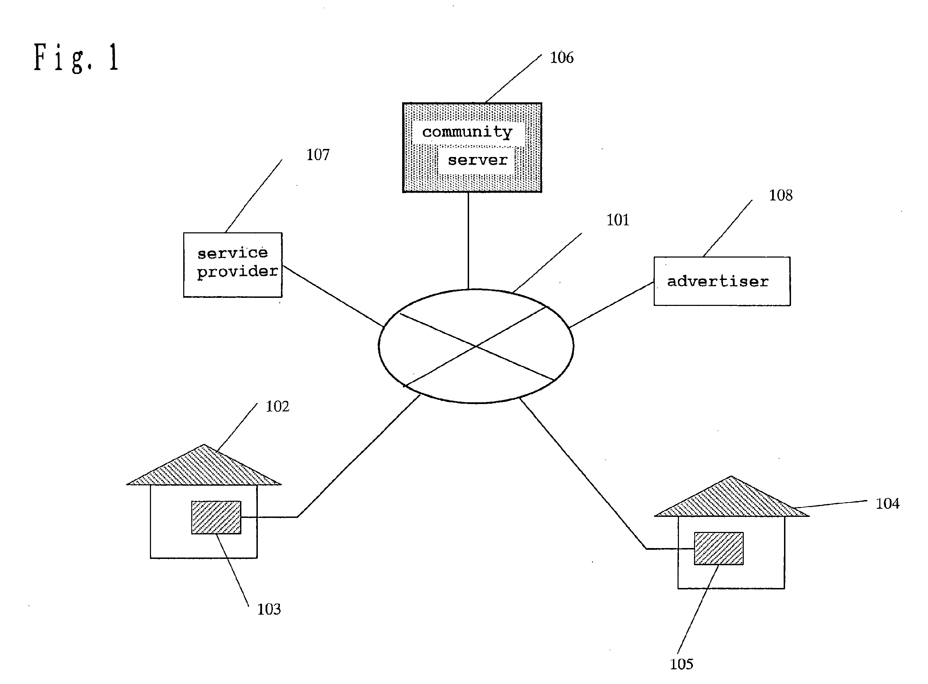

Fig. 1 is a diagram showing the whole system configuration.

In Fig. 1, 101 denotes a network such as the Internet.

The reference numerals 102 and 104 denote users who are joining or intend to join a community, and 103 and 105 denote information terminals which, when the corresponding user is to join a community, collect and generate preference information that is required for judging which community is adequate.

The reference numeral 106 denotes a server which manages communities. The server receives user preference information which is transmitted from the users 102 and 104, performs clustering on the users on the basis of plural sets of accumulated preference information of plural users, and received preference information, and grasp a created class as a community. Thereafter, the server transmits to a user information indicating the community to which the user belongs.

The reference numeral 107 denotes a service provider which provides to a user product information, service information, or the like which relates to the subject of discussions in a community. The reference numeral 108 denotes an advertiser who provides advertisement information to a community which a user joins.

### (Embodiment 1)

In a first embodiment, a procedure of automatically extracting preference information of a user by an information terminal, transmitting data to which a digital signature is added to provide a function of authenticating, to a server, performing authentication on the received data by the server, and extracting the preference information of the user from the received data will be described.

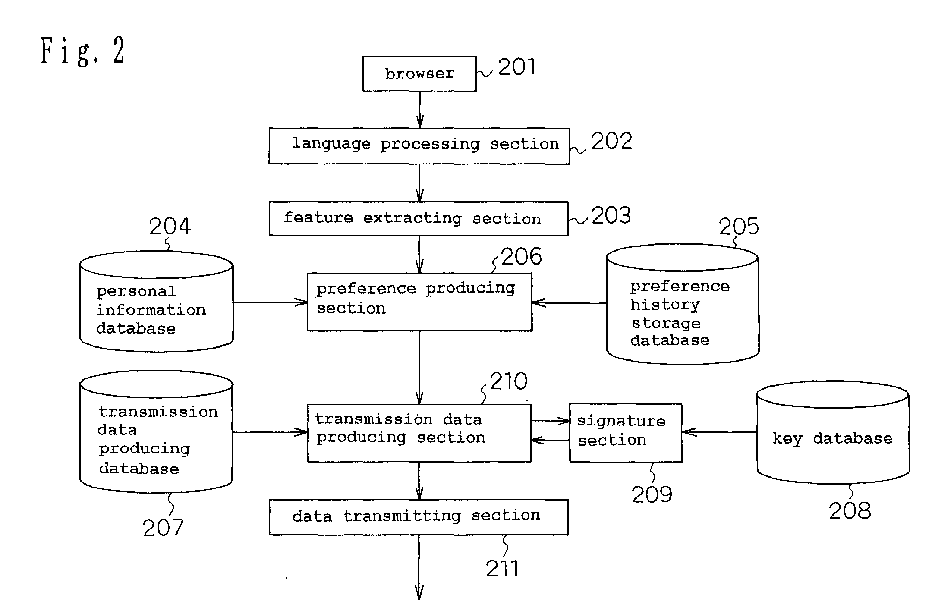

Fig. 2 is a view showing a modeling of a process of extracting preference of a user from information which the user reads through a browser, and transmitting data.

In Fig. 2, 201 denotes a browser such as Internet Explore, and 202 denotes a language processing section which performs language processing such as a morphological analysis on language information that is read through the browser 201.

The reference numeral 203 denotes a feature extracting section which extracts data indicating preference of the user from the data which is processed by the language processing section 202.

The reference numeral 204 denotes a personal information database which stores information relating to a user such as the distinction of sex, the age, and interests of the user.

The reference numeral 205 denotes a preference history storage database which, when the user has already held preference information, stores the preference information.

The reference numeral 206 denotes a preference producing section which produces new preference information of a user from user preference information which is output from the feature extracting section 203 with respect to contents of the browser that the user reads, personal information which is output from the personal information database 204, and preference history information which is output from the preference history storage database 205.

The reference numeral 207 denotes a transmission data producing database which stores formats of data that will be used in transmission of preference information as a transmission data.

The reference numeral 208 denotes a key database which stores keys that will be used in the provision of digital signature.

The reference numeral 209 denotes a signature section which provides a signature to a data by using a key of the key database 208.

The reference numeral 210 denotes a transmission data producing section which performs tagging in accordance with a format stored in the transmission data producing database, transfers tagged information to the signature section 209, receives a signature from the signature section 209, provides the signature to tagged data to produce a transmission data.

The reference numeral 211 is a data transmitting section which transmits the data produced in the transmission data producing section 210.

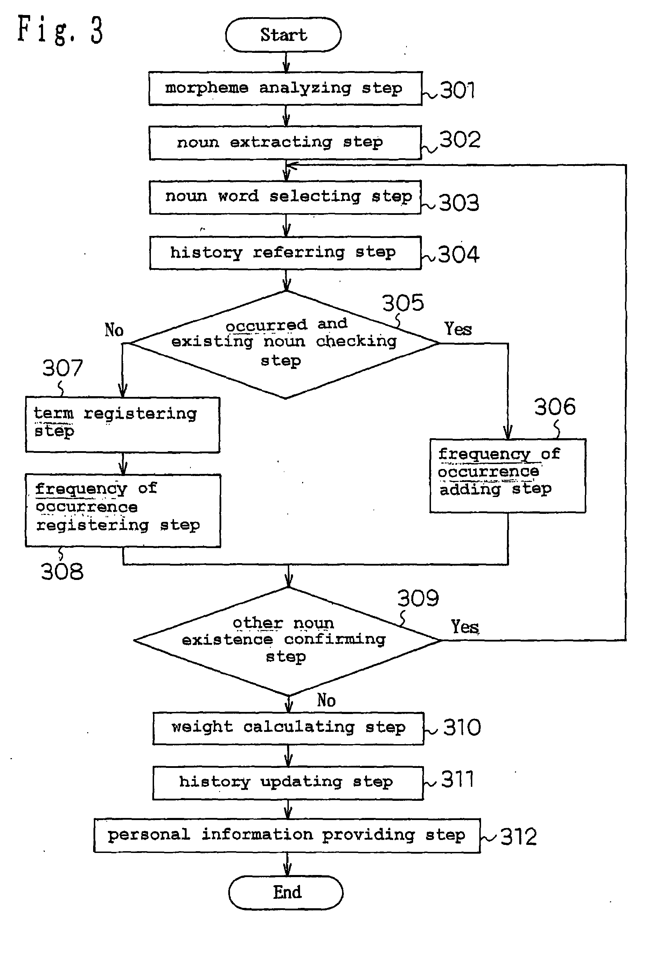

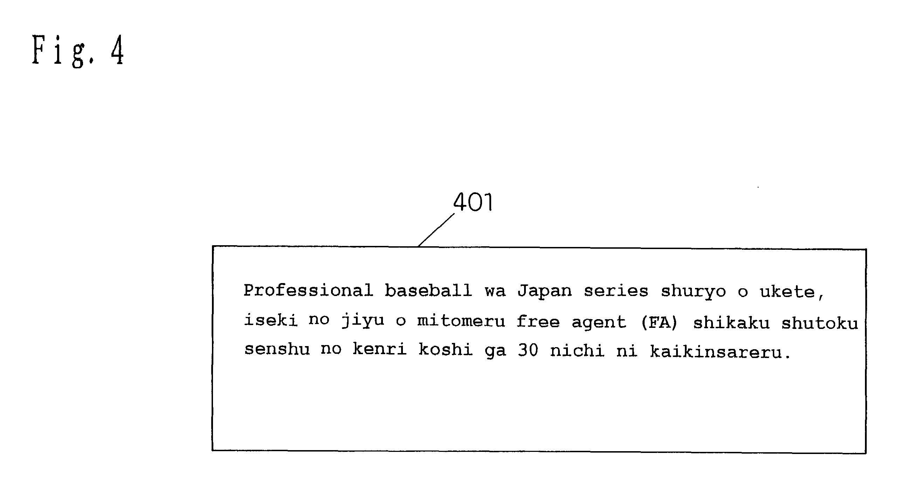

Next, the operation in the case where a language data shown in Fig. 4 is input through a browser will be described with reference to the flowchart of Fig. 3. The Japanese language data shown in Fig.4 means that "in the professional baseball, in response to the end of the Japan series, execution of right of a player having the right of free agent (FA) in which transference can be freely performed is enabled on the 30th day."

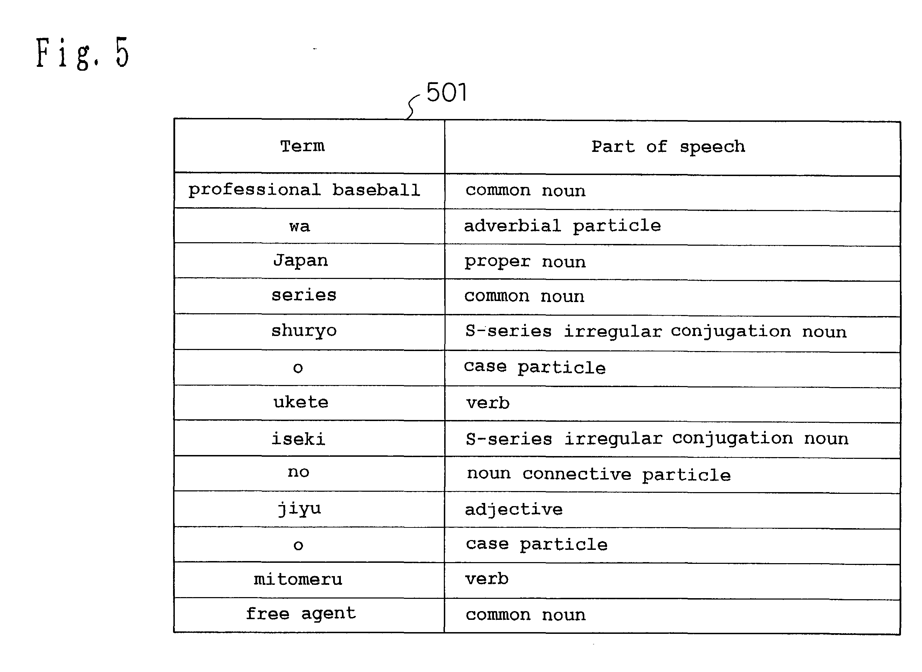

In step 301 which corresponds to the operation of the language processing section 202, the language data 401 is morphologically analyzed to obtain a morphological analysis result indicated by 501 in Fig. 5.

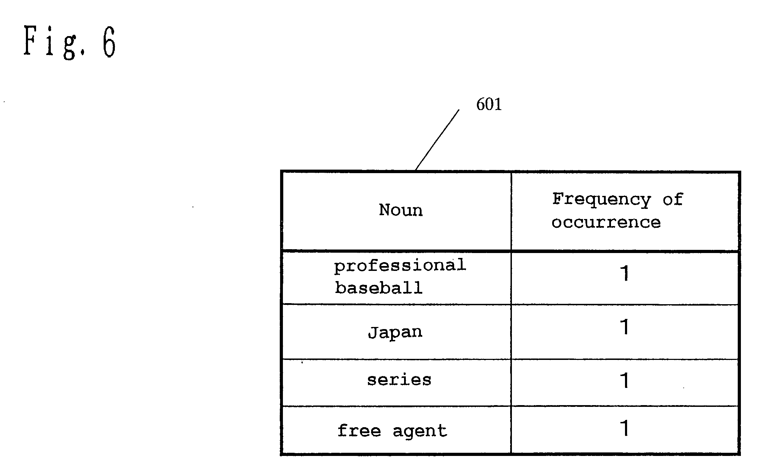

In step 302 which corresponds to the operation of the feature extracting section 203, only nouns are extracted from the data which has been morphologically analyzed, and a data indicated by 601 in Fig. 6 and configured by terms and the frequencies of occurrence of the terms is produced.

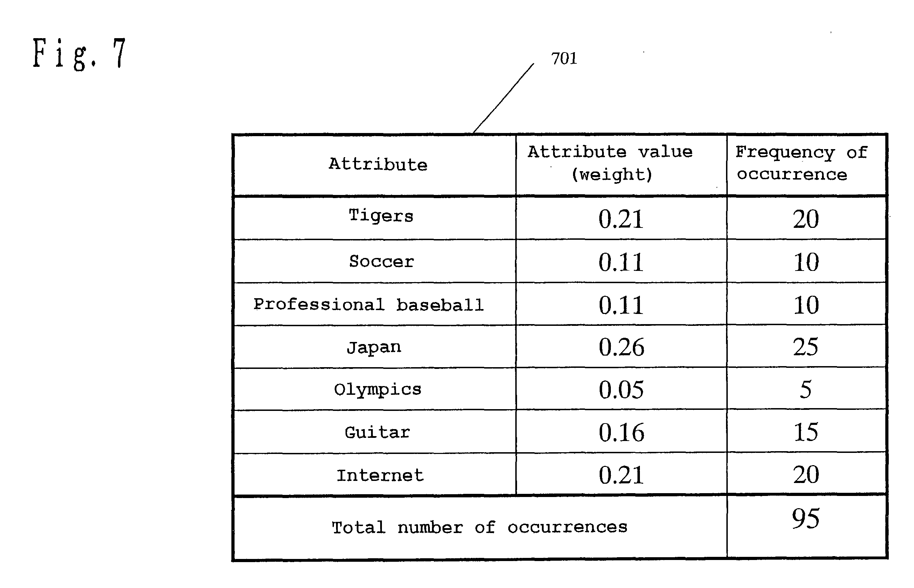

Steps 303 to 309 correspond to the operation of the preference producing section 206. In the steps, a word is selected one by one from the noun data 601, and, with reference to a data 701 stored in the preference history storage database 205, it is judged whether the selected noun is already stored in the database 205 or not. In the preference history storage database 205, current history information of preference of a person is stored. As shown in the preference history data 701 of Fig. 7, the information includes words as attributes, and frequencies of occurrence of reading by the user and rates (weights) of frequencies of occurrence of all words in each of which the frequency of occurrence is stored, as attribute values.

The word "professional baseball" in the extracted noun data 601 (see Fig. 6) will be considered. Since "professional baseball" is stored in the preference history data 701 (see Fig. 7), the addition of the frequency of occurrence in step 306 is implemented to increment the frequency of occurrence by one, so that the frequency of occurrence is set to "eleven".

In step 309, it is judged whether a noun which has not yet been selected in the noun data 601 exists or not. If exists, subsequent nouns "Japan" and "series" are sequentially selected in steps 303 to 305. Referring to the preference history data 701, it is judged whether the nouns are already stored or not.

Then, the case where last noun "free agent" in the noun data 601 is selected will be considered.

In step 304, referring to the preference history data 701, it is judged that "free agent" has not yet occurred. In steps 307 and 308, word "free agent" as an attribute, and the frequency of occurrence of the word, "1" are newly registered into the preference history data 701. In step 309, it is then judged that a word which has not yet been selected in the noun data 601 does not exist.

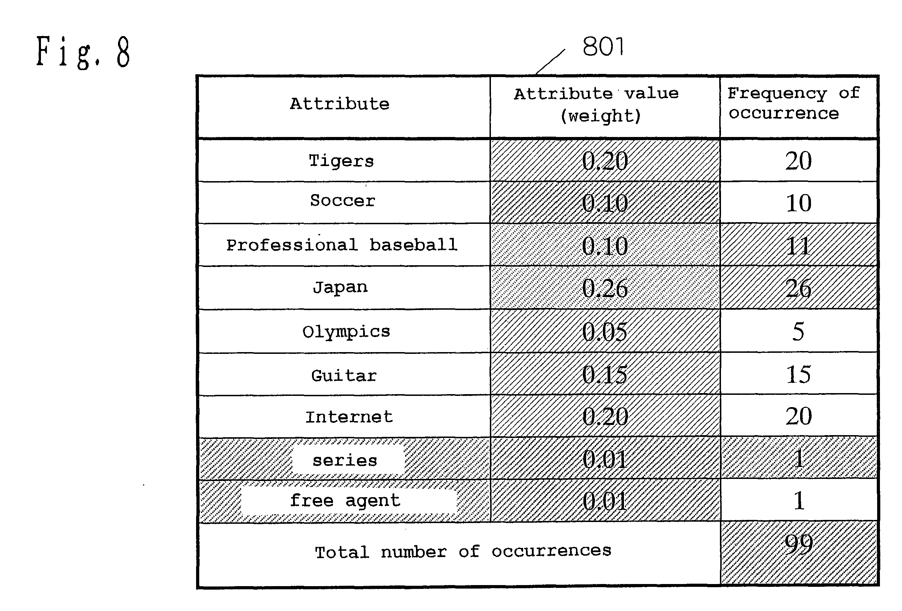

In steps 310 and 311, from all frequencies of occurrence of the preference history data 701 to which the noun data 601 is added, weights of the words serving as attributes are calculated as attribute values, and a new preference history data indicated by 801 in Fig. 8 is produced.

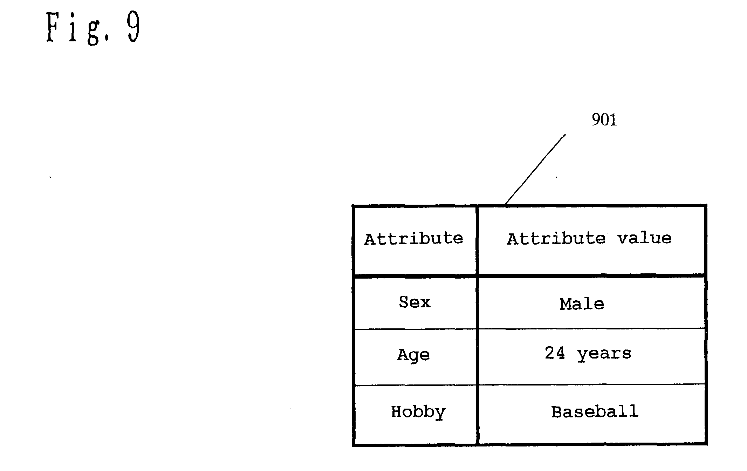

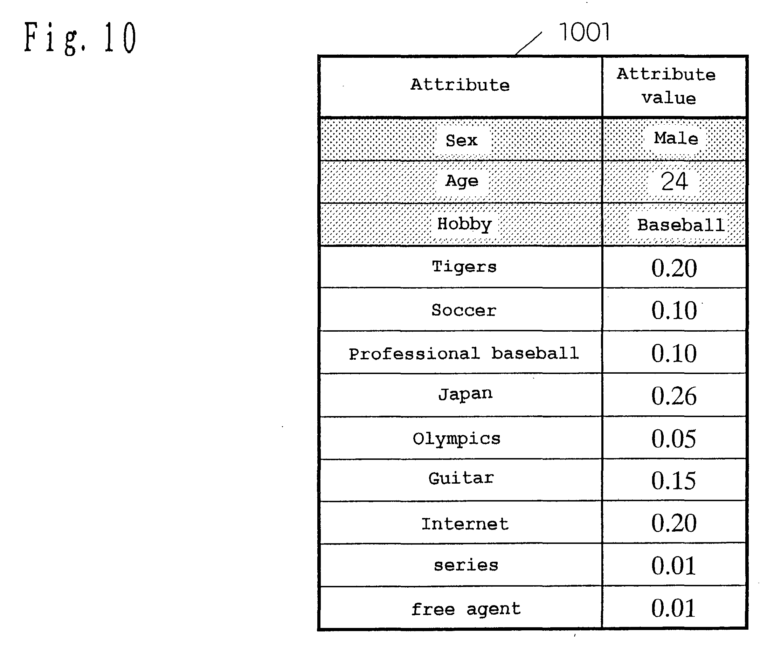

In step 312, a personal information data shown in Fig. 9 and stored in the personal information database 204 is added to the new preference history data 801 which is produced as described above, and a preference information data 1001 shown in Fig. 10 is produced as new preference information.

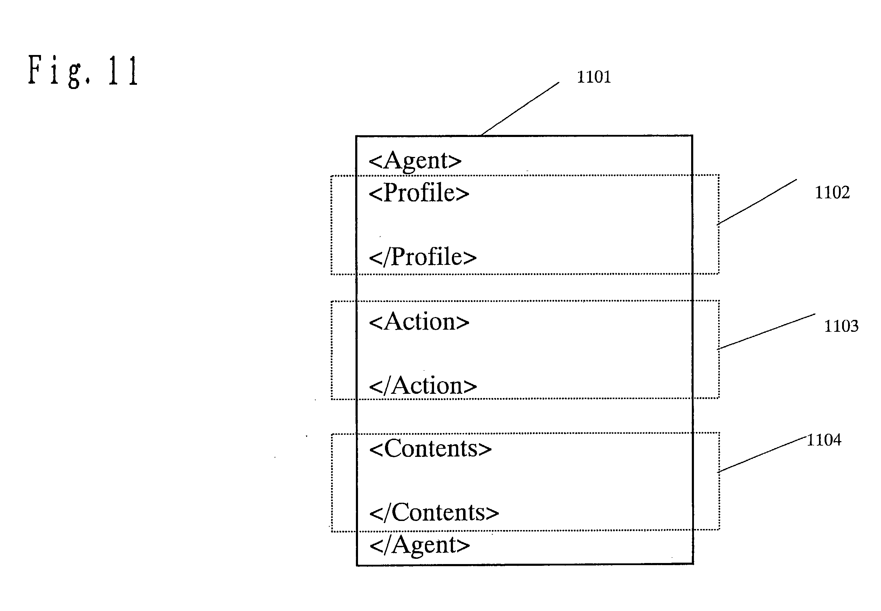

The transmission data producing section 210 receives the preference information 1001 which is produced by the preference producing section 206 in the above-mentioned flowchart. The transmission data producing section 210 produces a transmission data of a format which is tagged as indicated by 1101 in Fig. 11. For example, XML can be used as the tagging rule.

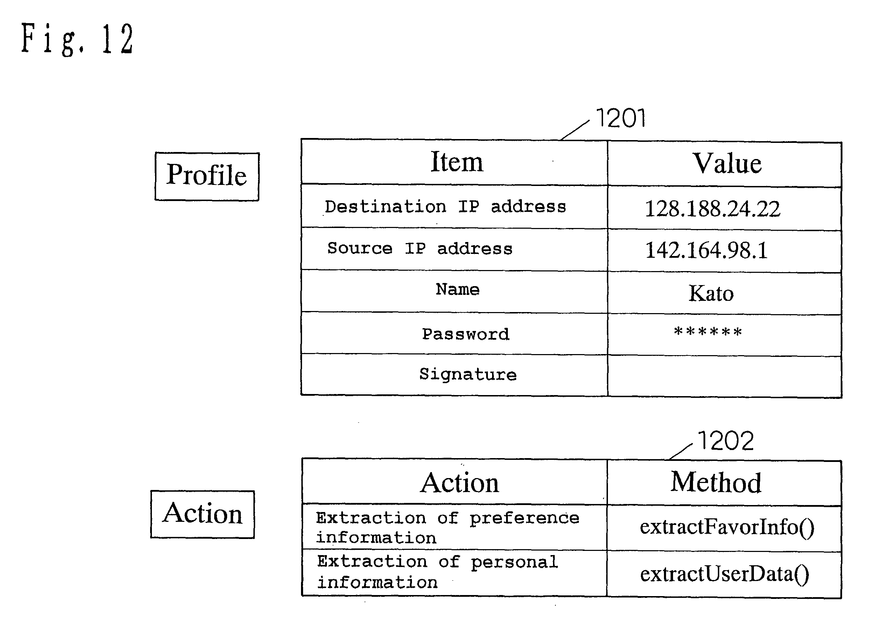

In the figure, 1102 denotes "Profile" information of the transmission data. As described in 1202 of Fig. 12, the detail of "Profile" information is configured by:
"Destination IP address" indicating the destination of the transmission data; "Source IP address" indicating the source from which the transmission data is transmitted; "Name" of the user; and "Signature" which is added to the transmission data by the signature section 209.

In Fig. 11, 1103 denotes methods which can be applied on the transmission data in the reception side, and which are described as "Action" information. As described in 1202 of Fig. 12, the detail of "Action" information is configured by: a method of extracting preference information included in the transmission data; and a method of extracting personal information included in the transmission data.

In Fig. 11, the preference information 1001 which is produced by the preference producing section 206 is described in Contents part 1104 enclosed by <Contents> tag.

The tag names, Agent, Profile, Action, and Contents may be replaced with other names or symbols as far as they can be uniquely identified in the transmission and reception sides.

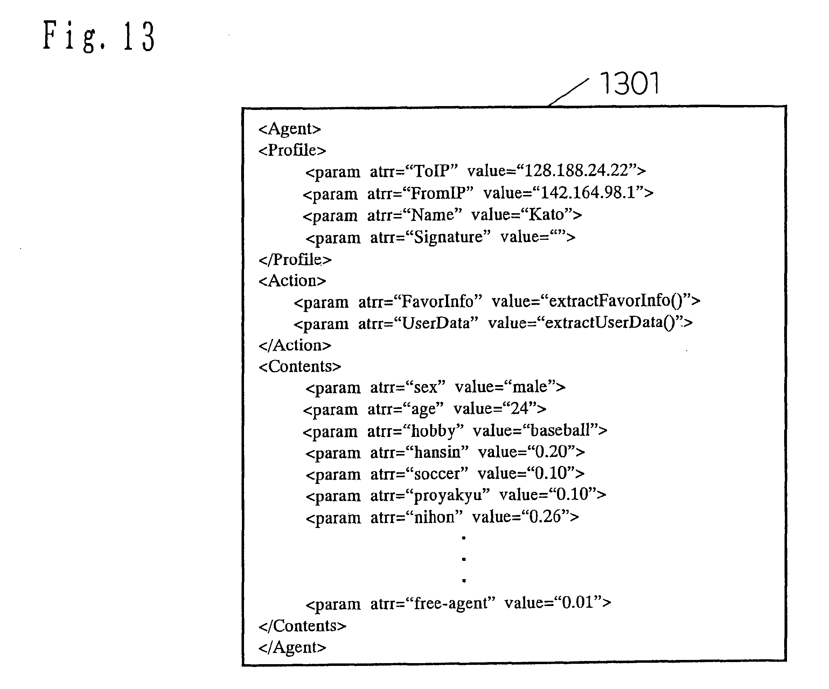

A data which is tagged as shown in Fig. 13, i.e., a tagged data 1301 is produced by the transmission data producing database 207 and the transmission data producing section 210.

For the operation of the signature section 209, "pair" of "private key" and "public key" are previously produced. "Private key" is stored in the key database 208. By contrast, "public key" is stored in the server which is to receive a transmission data.

The "pair" of keys may be produced in an information terminal of a user, and "public key" may be then transmitted to the server. Alternatively, the keys may be produced in the server, and "private key" may be stored into the key database 208 of the user by means of downloading or another storage medium. In order to improve the security, a public key and a private key may be newly produced at predetermined time intervals.

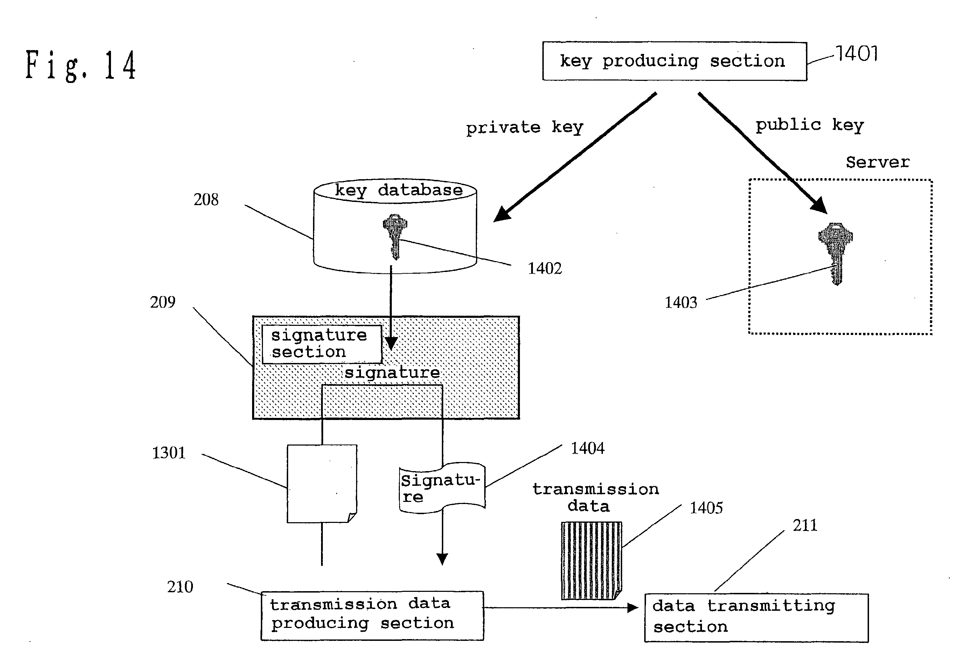

A procedure of adding "Signature" to the tagged data 1301 to produce a transmission data 1405 will be described with reference to Fig. 14.

In Fig. 14, 1401 denotes a key producing section which produces "pair" of "private key" and "public key" for data authentication.

The reference numeral 1402 denotes the private key which is stored in the key database 208, and 1403 denotes the public key which is stored in the server.

The signature section 209 receives the tagged data 1301 from the transmission data producing section 210, takes out "private key" 1402 from the key database 208, and produces "Signature".

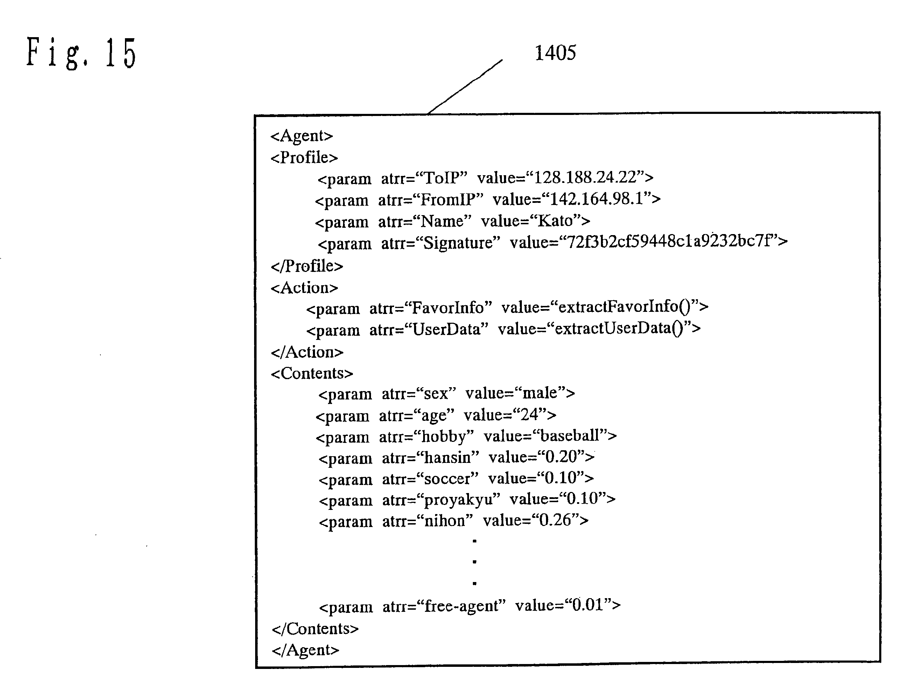

"Signature" which is produced in the signature section 209 is returned to the transmission data producing section 210. The transmission data producing section 210 provides "Signature" 1404 to the tagged data 1301 to produce a transmission data 1405 shown in Fig. 15, and sends the transmission data 1405 to the data transmitting section 211.

Next, a procedure in which the server 106 (see Fig. 1) receives the transmission data 1405 which is transmitted from the information terminal of the user, performs authentication, and extracts preference information of the user from the transmission data 1405 will be described.

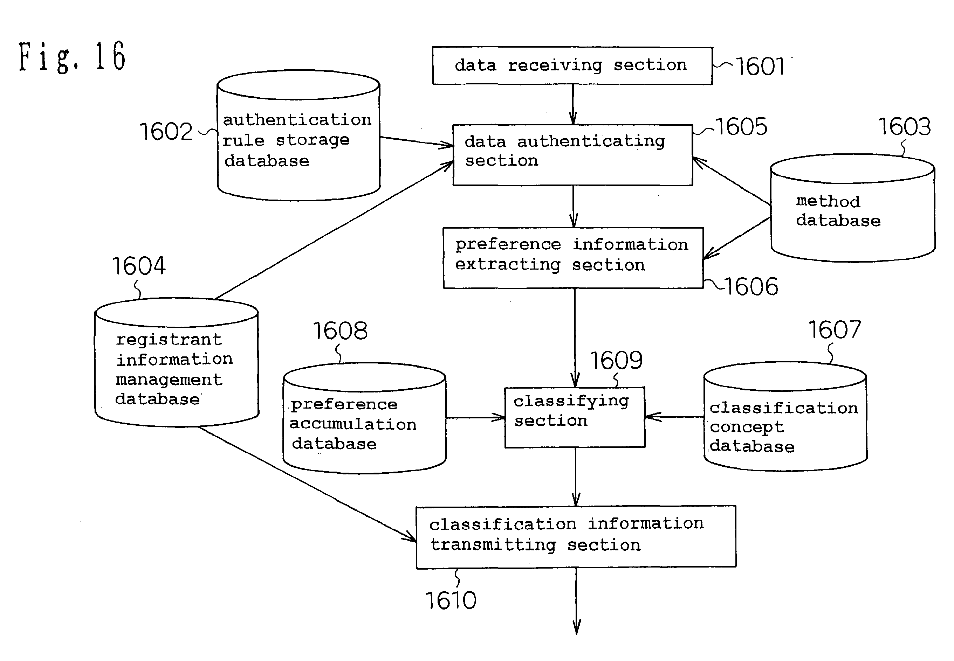

Fig. 16 is a view showing a modeling of the process.

In Fig. 16, 1601 denotes a data receiving section which receives the transmission data 1405 transmitted from the information terminal of the user.

The reference numeral 1603 denotes a method database which stores methods that can be applied to a received data by the server.

The reference numeral 1604 denotes a registrant information management database which manages information of users registered in the server.

The reference numeral 1602 denotes an authentication rule storage database which stores a rule for performing authentication on the data 1405 received by the data receiving section 1601.

The reference numeral 1605 denotes a data authenticating section which performs authentication on the received data 1405 by using a method stored in the method database 1603 with reference to the registrant information management database 1604 and the authentication rule storage database 1602.

The reference numeral 1606 denotes a preference information extracting section which extracts preference information with reference to a method of extracting preference information of the user from a data that is authenticated by the data authenticating section 1605, among the methods stored in the method database 1603.

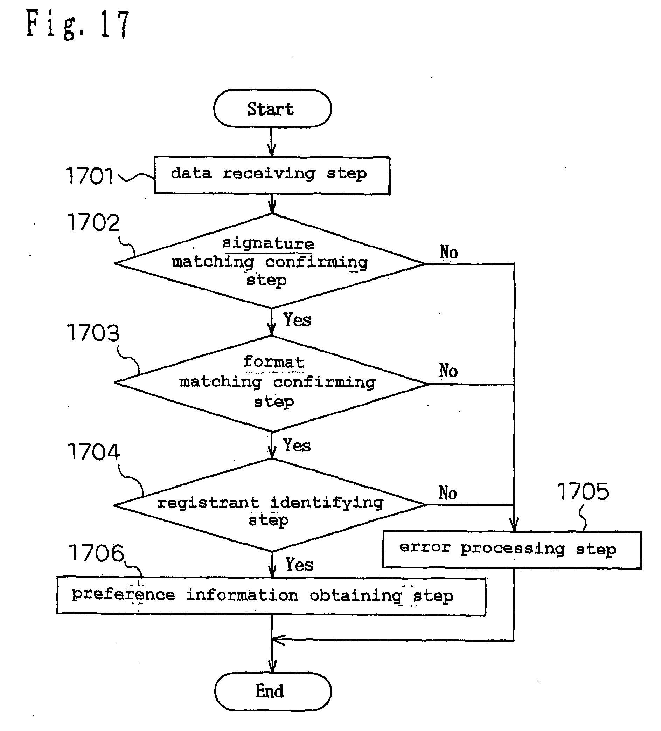

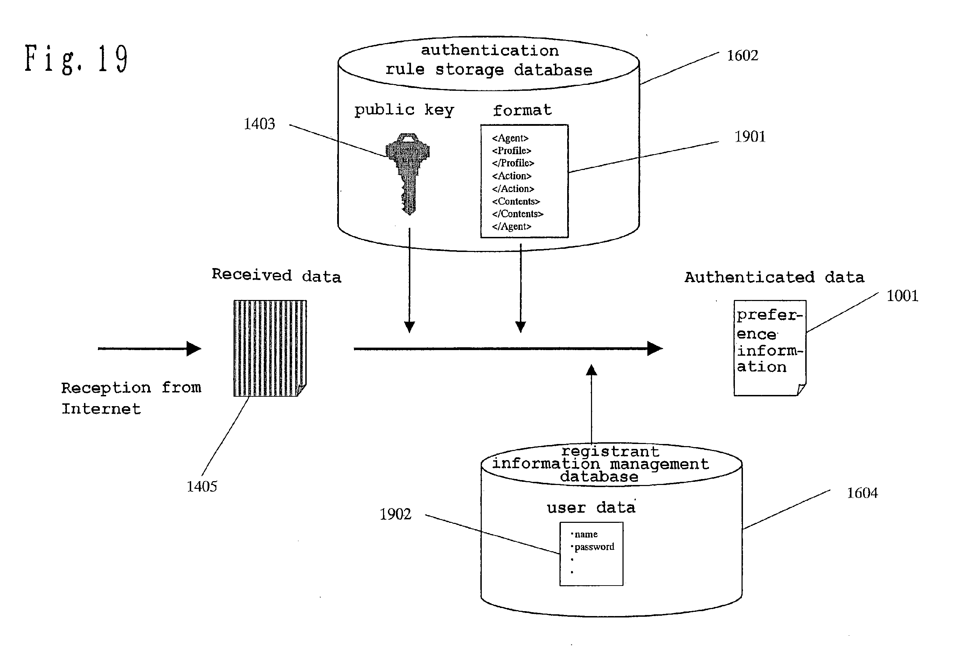

The procedure of authentication will be described with reference to the flowchart of Fig. 17, and Fig. 19.

In step 1701 corresponding to the operation of the data receiving section 1601, the data transmitted by the user is received.

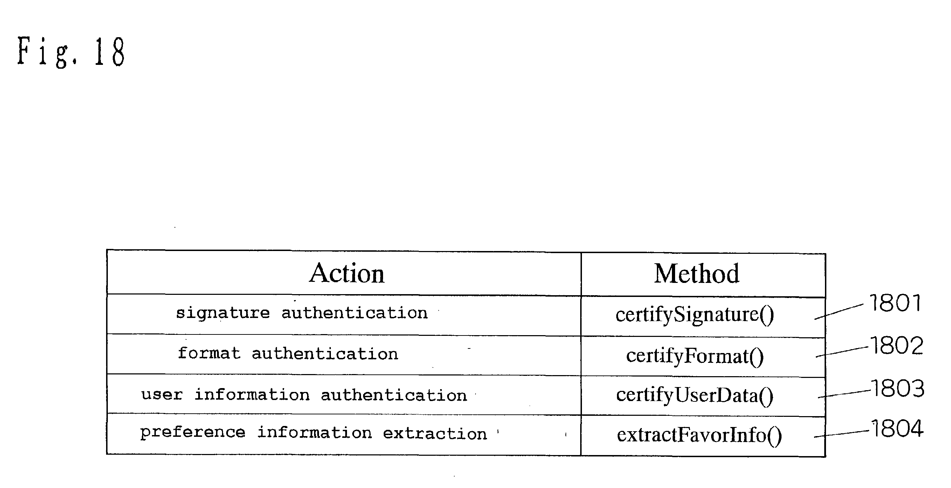

Steps 1702 to 1704 correspond to the operation of the data authenticating section 1605. The methods of the method database 1603 which will be used in the data authenticating section 1605 will be described with reference to Fig. 18. The reference numeral 1801 denotes a signature authentication method which performs authentication on the signature written in the received data, 1802 denotes a format authentication method which performs authentication on the format of the received data, and 1803 denotes a user information authentication method which performs authentication on the user information 'written in the received data.

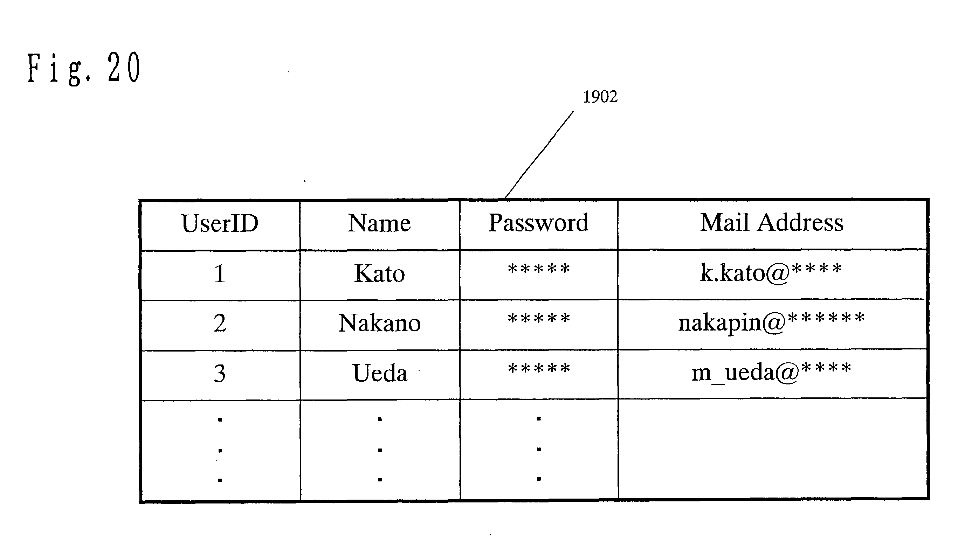

First, in step 1702, the signature authentication method 1801 performs authentication on the signature of the received data 1405 to check whether the signature is correct or not, by using the public key 1403 (produced by the key producing section 1401 of Fig. 1 4) which is stored in the authentication rule storage database 1602. If the. signature is proved to be adequate, the format authentication method 1802 performs authentication on the received data 1405 by using a data 1901 which is stored similarly in the authentication rule storage database 1602, and which describes a format that the received data should have. The format data 1901 shows that, in the format that the received data should have, the outermost frame is enclosed by "<Agent>" tag and "</Agent>" tag and data are described between the tags with being enclosed by "<Profile>" and "</Profile>", "<Action>" and "</Action>", and "<Contents>" and "</Contents>". If the format is correct, it is judged in step 1704 whether the user data 1902 which is managed by the registrant information management database 1604 coincides with the received data 1405 or not. Fig. 20 shows the user data 1902 in detail.

It is judged whether the user name and the password in the data which is managed in the user data 1902 in Fig. 20 coincide with "Profile" information of the received data 1405 or not.

If the received data 1405 is not authenticated in any one of steps 1702 to 1704, an error process is performed in step 1705.

In step 1706 corresponding to the operation of the preference information extracting section 1606 of Fig. 16, the preference information of the user is extracted from the data which is authenticated in steps 1702 to 1704, by using a preference information extraction method 1804 which is stored in the method database 1603.

In the embodiment, keywords extracted from the Web reading history by a browser are assumed as the data for producing preference information of the user. The data is not restricted to the above, and a data such as a history and tendency of purchase of articles in an actual shop or a virtual shop on a Web may be used.

When such a purchase history is used, the embodiment can be used in the following manner. For example, persons which have recently purchased baby articles such as diapers or powdered milk seem to have various worries, anxieties, or questions about baby care or parturition. Therefore, a community which such persons join may be created.

### (Embodiment 2)

In a second embodiment, a method of creating a community when a new participant appears in the case where a community has been already constructed on the Internet will be described.

Namely, a method of creating a community to which a new user is added, by performing clustering based on the preference information 1001 received by the server 106 from a user who wishes to newly join a community, and information relating to a community that has been constructed on the basis of preference information of plural users who have already joined the community (hereinafter, such a community is often referred to as category) will be described.

Among components of the server shown in Fig. 16, those which are used in the embodiment will be described.

The reference numeral 1607 denotes a classification concept database which stores concept information that is a result of current clustering.

The reference numeral 1608 denotes a preference accumulation database which stores preference information relating to all members belonging to a community, such as that shown in Fig. 10.

The reference numeral 1609 denotes a classifying section which newly performs clustering with including the preference information 1001 that is the output of the preference information extracting section 1606 in Embodiment 1, with reference to the preference accumulation database 1608 and the classification concept database 1607.

The reference numeral 1610 denotes a classification information transmitting section which notifies a change to a user belonging to the category which is changed as a result of new classification performed by the classifying section 1609, with reference to the registrant information management database 1604.

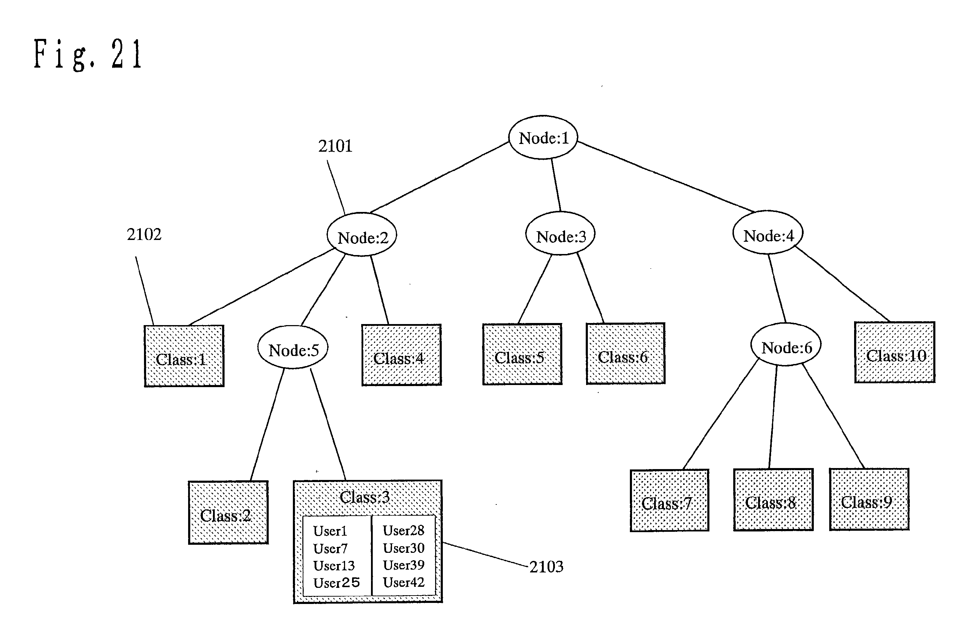

Next, the classification concept database 1607 will be described. Fig. 21 shows the database in detail.

In the figure, the ovals shows nodes (corresponding to 2101) indicating branches of a category.

The rectangles show categories (corresponding to 2102), and indicate that dispersion of preference information of users belonging to each of the categories is smaller than a certain fixed value.

In the figure, it is shown that members belonging to "Class:3" 2103 which is one of the categories are "User1", "User7", "User13", "User25", "User28", "User30", "User39", and "User42".

Classes to which members belong are stored in the sequence starting from a higher-level node. When "User1" is taken as an example, it is stored that the user belongs to "Class:3" which is lower in level than "Node:2" and "Node:5".

Next, the operation in the case where the classifying section 1609 receives new preference information as an input will be described.

The case where "COBWEB" which is a concept forming technique for automatically forming a concept from plural examples is used as the classifying section 1609 will be described. The detail of "COBWEB" is described in a literature, "Fisher, Conceptual clustering, Learning from Examples, and Inference, Proceeding of the Fourth International Workshop on Machine Learning, pp. 38-49, 1987."

In "COBWEB", a value which is called category utility (hereinafter, referred to as CU value) is used as an index of classification. The CU value is a value indicating the similarity of intracategory data and the dissimilarity of intercategory data. The operation of the classifying section 1609 advances with selecting a conceptual configuration in which the CU value is maximum.

The classifying section 1609 performs the following four operations on new preference information and the current clustering result (corresponding to Fig. 21).

The operation which is performed for judging an optimum category with respect to a hierarchy that is lower by one level than "Node:1" of Fig. 21 will be described.

### 1. Addition to current category

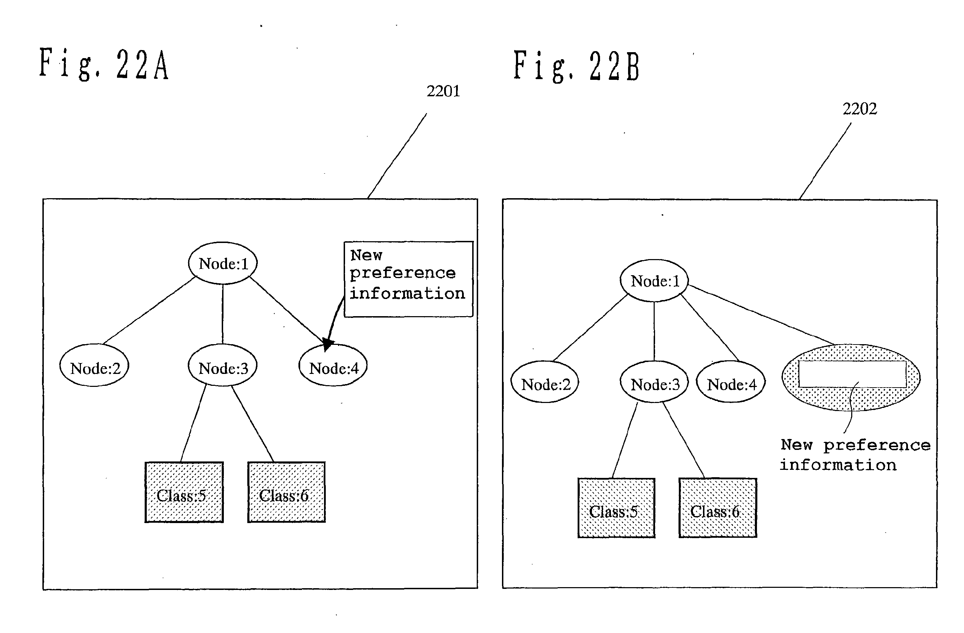

The CU value is calculated for the case where new preference information is added to each of existing categories "Node:2", "Node:3", and "Node:4" as an example shown in 2201 of Fig. 22A.

### 2. Creation of new category

The CU value is calculated for the case where a category is newly created in the same level as "Node:2", "Node:3", and "Node:4" as shown in 2202 of Fig. 22B.

### 3. Integration of categories

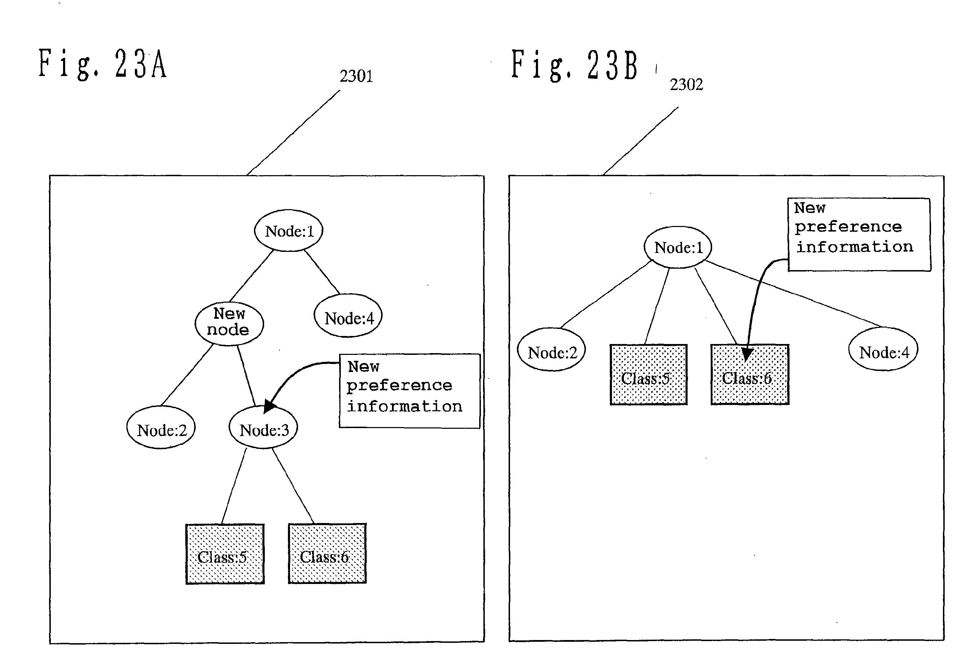

The CU value is calculated for all the cases where two categories (Nodes 2 and 3 of Fig. 21) are integrated into a new category (New Node of Fig. 23A) as an example shown in 2301 of Fig. 23A.

### 4. Division of category

The CU value is calculated for all the cases where one category (Node 3 of Fig. 21) is divided into two categories (Classes 5 and 6 of Fig. 23B) as an example shown in 2302 of Fig. 23B.

The four operations are performed, and the classification method in which the largest CU value is obtained is employed. The same process is performed also on lower-level categories.

In response to an output of the classifying section 1609, the classification information transmitting section 1610 notifies new category information to the user who is newly added to the category, and the user belonging to the category which is changed as a result of classification performed by the classifying section 1609, with reference to an IP address or Mail address of the user data 1902 shown in Fig. 20 and in the registrant information management database 1604.

In the embodiment, the case where a user newly joins a community has been described. The embodiment is not restricted to this. For example, the embodiment may be modified as described below. When preference information of a user who has already joined a community is changed, the changed preference information is handled in the same manner as preference information of a new user in the embodiment, whereby the user whose preference is changed is enabled to newly join another community.

### (Embodiment 3)

In a third embodiment, a procedure of causing a user belonging to a certain community to belong also to one or more other communities will be described.

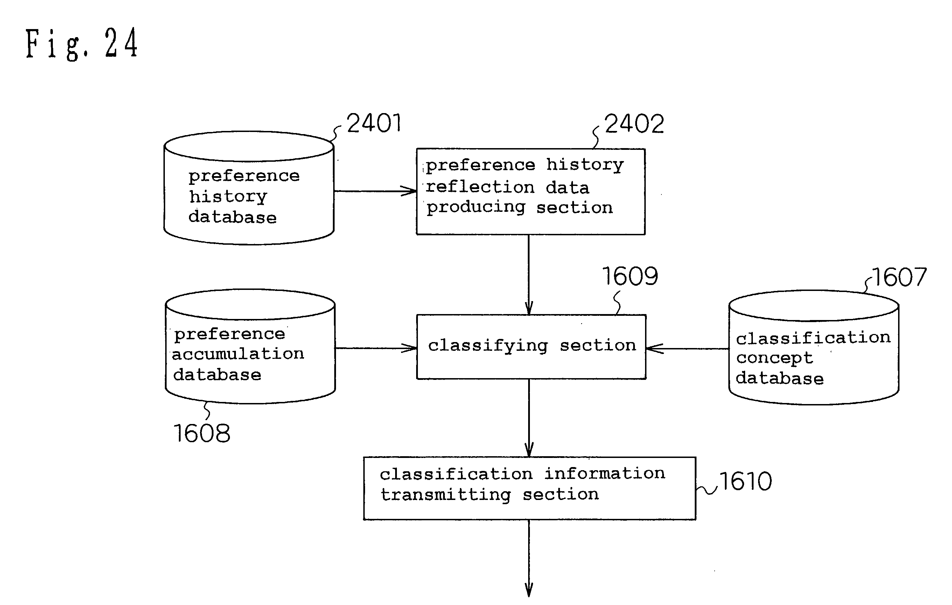

Fig. 24 is a diagram illustrating the operation of the embodiment.

The reference numeral 2401 denotes a preference history database which stores histories of preferences of users.

The reference numeral 2402 denotes a preference history reflection data producing section which refers history information of the preference history database 2401, and which produces preference information wherein the history is reflected.

The objects of the preference history database 2401 and the preference history reflection data producing section 2402 will be described below.

Preference data which is stored in the preference accumulation database 1608 with respect a certain person can be understood to be a data which indicates the long-term tendency of interest of the person. By contrast, when changes of the preference data over the long term are stored into the preference history database 2401, it is possible to produce preference information which shows a tendency of interest over a short term.

When a tendency of interest is expressed by an attribute and its frequency (weight), it is possible to produce a long-term preference data indicating the frequency of stable occurrences for a constant time period (the data corresponds to the first preference information in the invention), and a short-term preference data which, for the constant time period, shows a degree of change that is larger than a degree of change of the frequency of occurrence of the long-term preference data (the data corresponds to the second preference information in the invention).

In preference information data stored in the preference accumulation database 1608, therefore, communities which are clustered on the basis of the long-term preference data are different from those which are clustered on the basis of the short-term preference data.

As a result, a single user is allowed to belong to plural communities, and also to join any communities relating to a long-term interest of the user, and a short-term interest which the user will have, such as "recent fashionable topic".

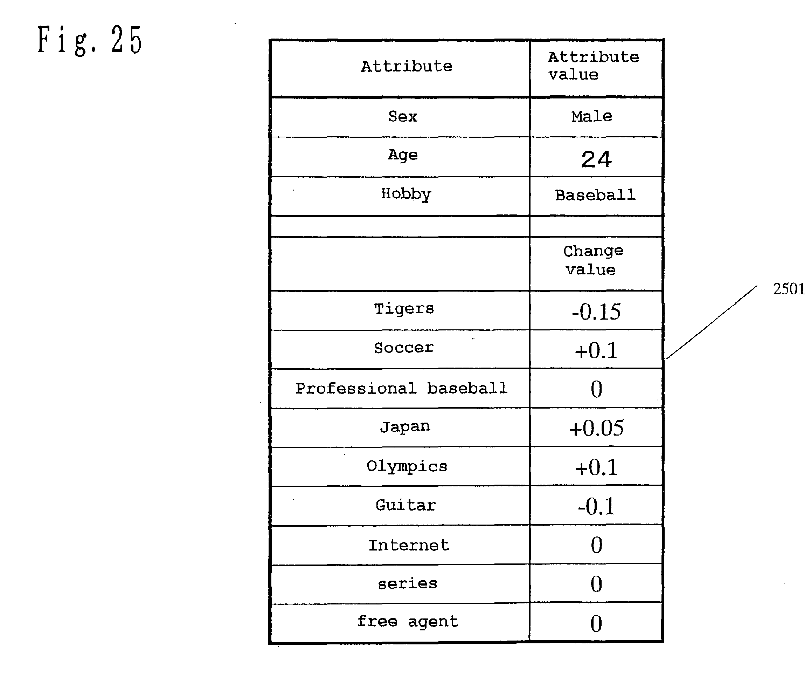

Fig. 25 shows a data indicating the history stored in the preference history database 2401.

As shown in the figure, the attribute value for each of the attributes in which the attribute value is numerized by the weight indicates a change of the attribute of each person which is stored in the preference accumulation database 1608.

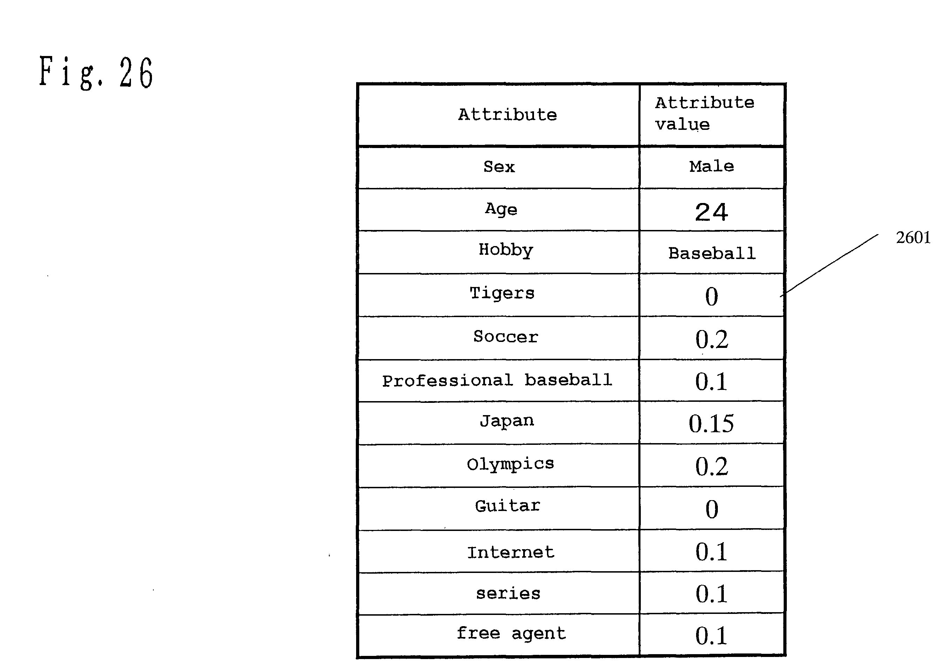

In the preference history reflection data producing section 2402, a data in which the recent interest of the user such as shown in Fig. 26 is reflected is produced from the data of the preference history database 2501 shown in Fig. 25. In the produced data, the attribute value of an attribute in which the change value is plus is set to be high, and that of an attribute in which the change value is minus is set to be low.

As a result, it is possible to produce a preference information data in which a feature of recent preference is reflected.

The classifying section 1609 receives as inputs an output data 2601 of the preference history reflection data producing section 2402, and outputs of the classification concept database 1607 and the preference accumulation database 1608, and performs the operation described in the second embodiment to determine a category to which the data of Fig. 26 belongs. As a result, the user can belong to two communities, i.e., the community which is clustered on the basis of the long-term preference data stored in the preference accumulation database 1608, and the community which is clustered on the basis of the short-term preference data that is produced by the preference history database 2401 and the preference history reflection data producing section 2402.

In the same manner as the second embodiment, the classification information transmitting section 1610 notifies the new category to the user.

The preference data which is used for clustering the user to plural communities is not restricted to a data which is based on the history of preference. An attribute may be selected from preference information in accordance with a certain selection criterion to newly produce preference information.

A preference data indicating the short-term interest of the user such as that shown in the embodiment may be produced by the server which manages the community, or by an information terminal which the user usually uses.

### (Embodiment 4)

In a fourth embodiment, an operation of reorganizing a community (reorganizing a category) when the community is in an inactive state because, for example, information exchanges are not vigorously performed will be described.

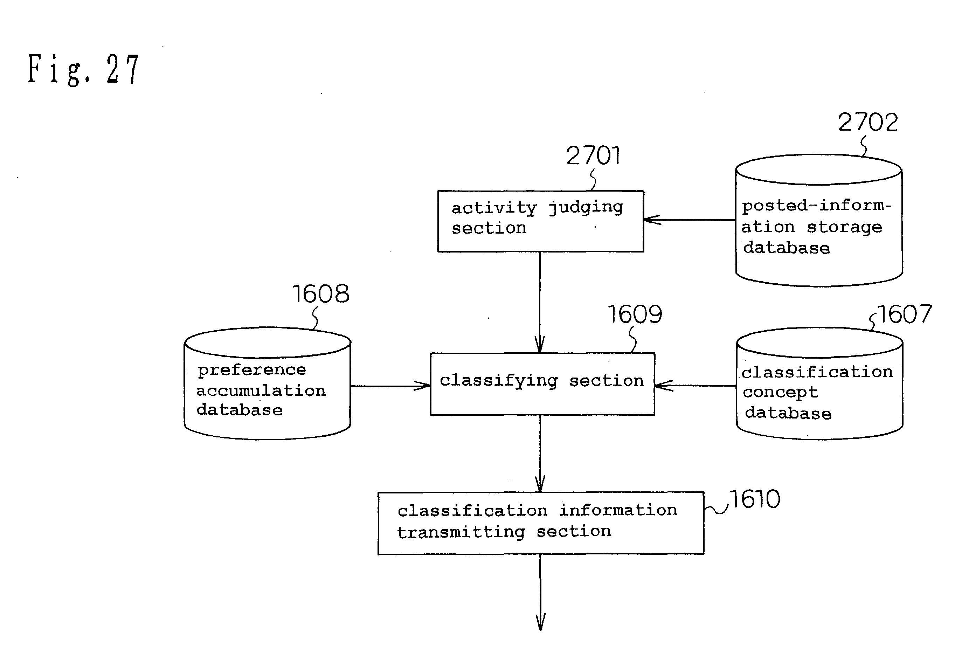

Fig. 27 is a diagram illustrating the operation of the embodiment.

In the figure, 2702 denotes a posted-information storage database which stores the sender, date, and contents of posted information in a community.

The reference numeral 2701 denotes an activity judging section which refers data stored in the posted-information storage database 2702, and which judges the degree of activity of a community.

The activity judging section 2701 extracts a community in which the degree of activity does not satisfy a degree-of-activity judgement criterion, from the posted-information storage database 2702.

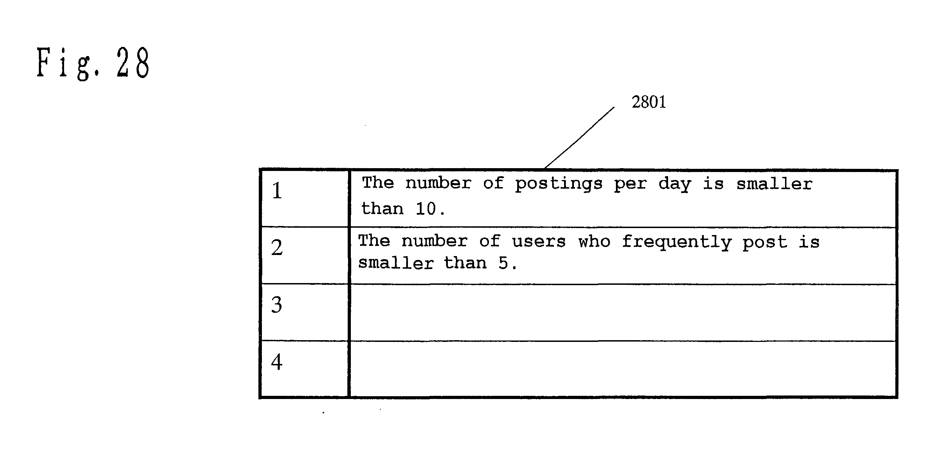

The degree-of-activity judgement criterion may include "number of postings per day", "number of regular posters", and "number of members of the community" which are shown in Fig. 28.

The classifying section 1609 receives information of an inactive community (category) from the activity judging section 2701, and integrates the community with an active community, or integrates or reorganizes inactive communities.

In the embodiment, the method of automatically detecting and reorganizing an inactive community has been described. When a degree-of-activity judgement criterion such as shown in Fig. 28 is used, communities can be presented to a user in the form in which each of the communities can be easily identified in accordance with the degree of activity.

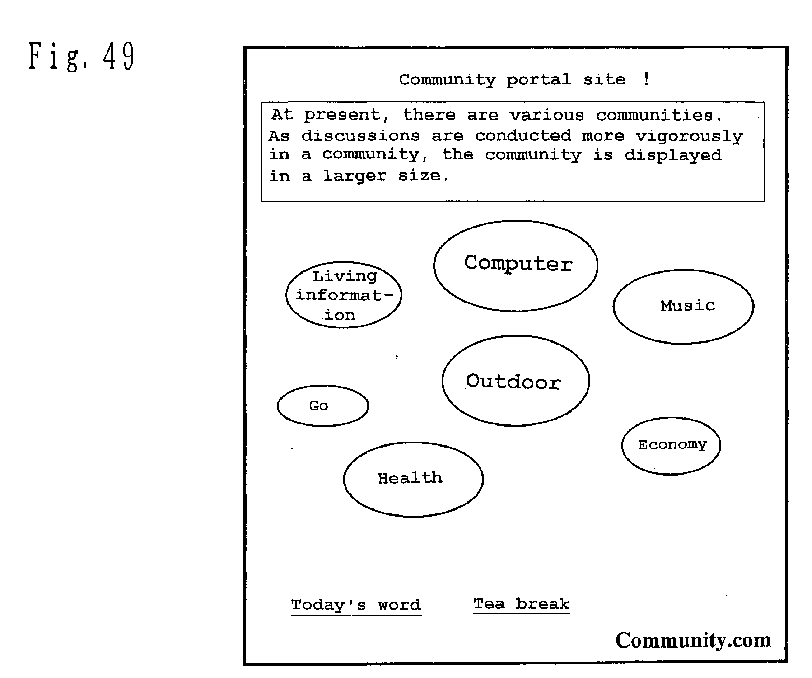

In Fig. 49, for example, symbols or characters shown in a portal site for communities and respectively indicating the communities may be displayed in different sizes in accordance with the degree of activity of the corresponding community. In this case, information indicating, for example, a community in which discussions are conducted most vigorously can be visually transmitted. Alternatively, a method may be employed in which symbols, characters, and wallpaper are displayed in different colors, instead of changing the sizes of the symbols or characters.

In a portal site such as shown in Fig. 49, symbols or characters respectively indicating communities may be displayed with correlating the positional relationships between them in accordance with similarity of the communities.

### (Embodiment 5)

In a fifth embodiment, a case where an enterprise provides a service with respect to contents of information which is exchanged in a certain community will be described.

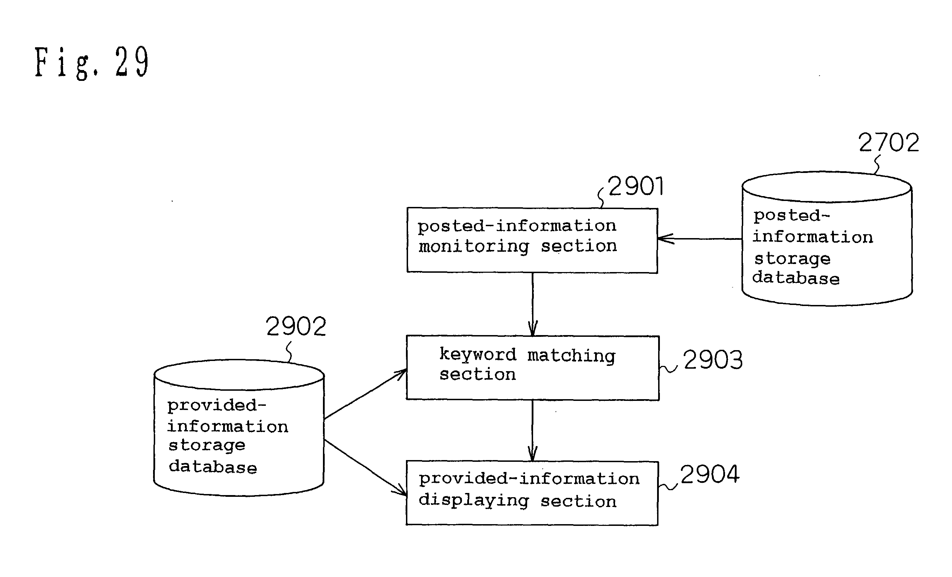

First, a configuration which is used in the embodiment is shown in Fig. 29.

In the figure, 2901 denotes a posted-information monitoring section which monitors and extracts information that is posted by a user in a community.

The reference numeral 2902 denotes a provided-information storage database in which information that the service provider 107 intends to provide the user, such as information of products or service is registered together with a keyword which is paired with the information.

The reference numeral 2903 denotes a keyword matching section which compares a keyword included in the information extracted by the posted-information monitoring section 2901 with the keyword registered in the provided-information storage database 2902, to judge whether the keywords coincide with each other or not.

The reference numeral 2904 denotes a provided-information displaying section which searches the provided-information storage database 2902 for information paired with a keyword that is judged to attain coincidence by the keyword matching section 2903, and which displays the paired information to the user who posted the keyword, or users joining the community and including the user who posted the keyword.

Next, the procedure in the embodiment will be described.

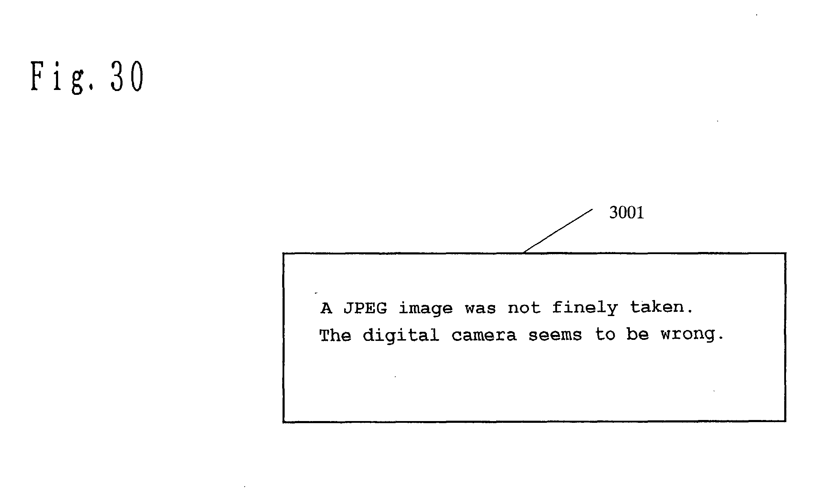

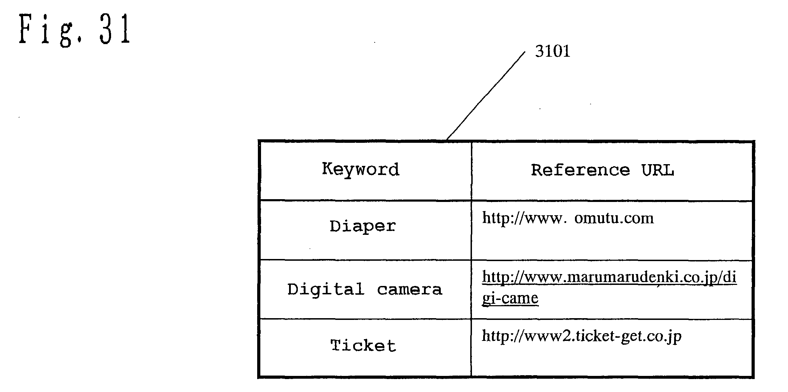

Fig. 30 shows a data which is posted to the posted-information storage database 2702, and Fig. 31 shows an example of information registered in the provided-information storage database 2902. In this example, a URL which is to be referred by a user is described as information which the service provider wishes to provide with respect to a keyword posted by a user.

A case where information indicated by 3001 is posted to the posted-information storage database 2702 is assumed. The posted-information monitoring section 2901 monitors the posted-information storage database 2702, and extracts the information 3001. The keyword matching section 2903 checks whether information extracted by the posted-information monitoring section 2901 includes a keyword stored in the provided-information storage database 2902 or not. In the embodiment, keyword "digital camera" attains coincidence. Therefore, the provided-information displaying section 2904 displays a URL, http://www.marumarudenki.co.jp/digi-came to the user who posted the keyword, or users joining the community and including the user who posted the keyword. When the user accesses the displayed URL, the user can obtain information relating to "digital camera".

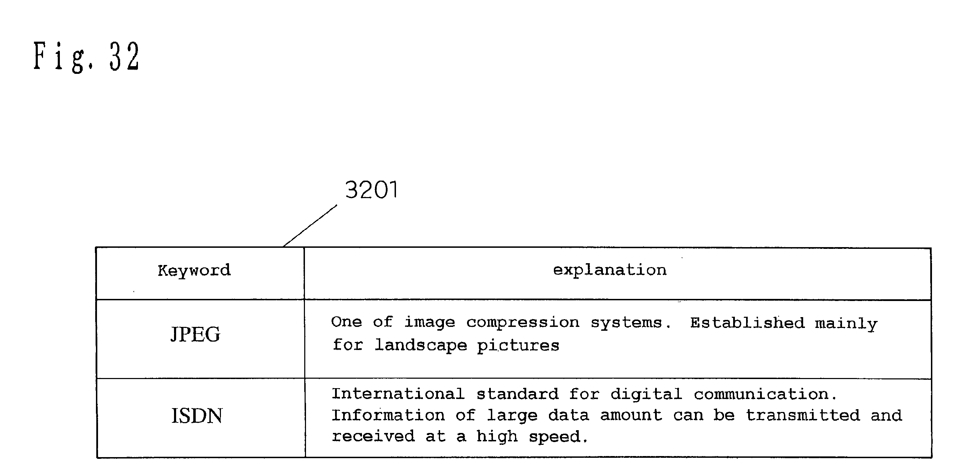

In the embodiment, the case where URL information such as a product or a service is handled as information which the service provider provides to a user has been described. Alternatively, information to be provided may not be a URL, but direct information such as explanation or price of a product or a service, or explanation information relating to the keyword posted by a user, as shown in 3201 of Fig. 32.

### (Embodiment 6)

In a sixth embodiment, a case where an advertiser displays to a community an advertisement relating to contents information of which is exchanged in the community will be described.

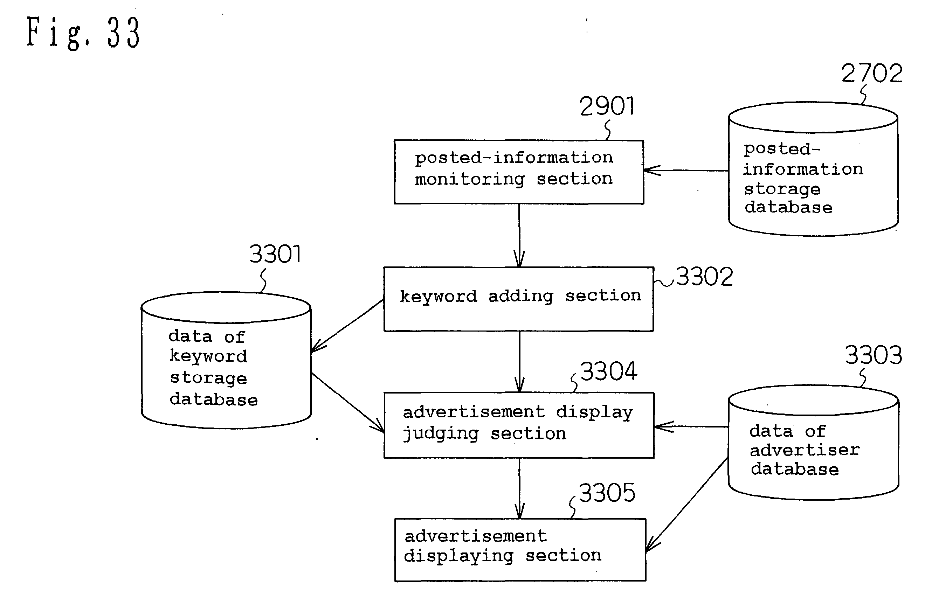

First, a configuration which is used in the embodiment is shown in Fig. 33.

In the figure, the functions of the posted-information monitoring section 2901 and the posted-information storage database 2702 are identical with those of the corresponding components of Embodiment 5.

The reference numeral 3301 denotes a keyword storage database which stores a keyword included in information posted to a community, together with the number of postings of the keyword.

The reference numeral 3302 denotes a keyword adding section which extracts a keyword from information extracted by the posted-information monitoring section 2901, and, if the keyword is stored in the keyword storage database 3301, increments the number of postings, and, if not stored, newly stores the keyword together with the number of postings.

The reference numeral 3303 denotes an advertiser database which stores an advertiser who wishes to display an advertisement to a community, together with conditions for displaying the advertisement and the contents of the advertisement. The conditions for displaying are set to that the number of postings of a keyword to the community reaches or exceeds a fixed number.

The reference numeral 3304 denotes an advertisement judging section which searches for a keyword stored in the keyword storage database 3301, and which judges whether the number of postings of the keyword satisfies the conditions of the advertiser in the advertiser database 3303 or not.

The reference numeral 3305 denotes an advertisement displaying section which displays to a community an advertisement of an advertiser who is judged to satisfy the conditions by the advertisement display judging section 3304.

Next, the procedure in the embodiment will be described.

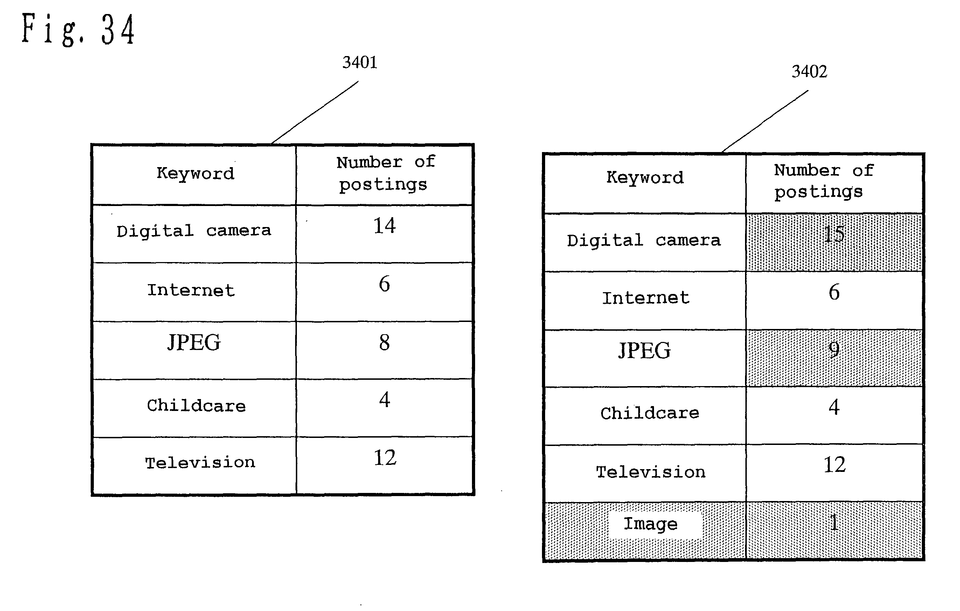

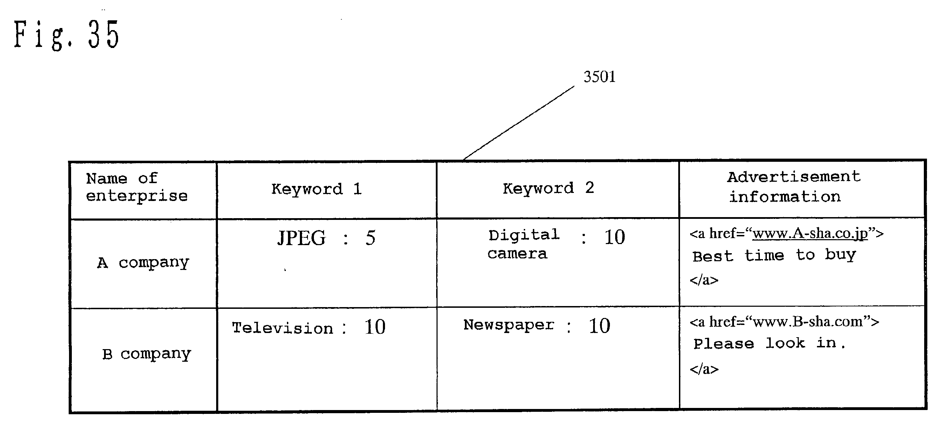

In Fig. 34, 3401 denotes information which is stored in the keyword storage database 3301, and in which a keyword and the number of postings of the keyword are stored with being paired with each other, and 3402 is a view showing a result of addition of a keyword and the number of postings by the keyword adding section 3302. In Fig. 35, 3501 denotes information which is stored in the advertiser database 3303, and in which the name of an enterprise, contents of an advertisement of the enterprise, and a keyword and the number of postings of the keyword that are conditions for displaying the advertisement of the enterprise are stored with being paired with each other.

In the same manner as Embodiment 5, a case where information indicated by 3001 in Fig. 30 is posted to the posted-information storage database 2702 is assumed. The posted-information monitoring section 2901 monitors the posted-information storage database 2702, and extracts the information 3001.

In response to an output of the posted-information monitoring section 2901, the keyword adding section 3302 extracts "JPEG", "image", and "digital camera" as keywords, and increments the number of postings for each of data indicated by 3401 of Fig. 34, thereby producing a data indicated by 3402.

The advertisement display judging section 3304 determines an enterprise among the enterprises stored in the advertiser database 3303 in which the data of the keyword storage database 3301 satisfies the conditions of displaying advertisement. In the embodiment, it is judged that the conditions of "A company", "JPEG: 5 times", and "Digital camera: 10 times" in the data of 3501 are satisfied.

In response to an output of the advertisement display judging section 3304, the advertisement displaying section 3305 displays the advertisement of "A company" to the community.

In the embodiment, the number of postings of a keyword is set as the conditions of displaying an advertisement. Alternatively, an occurrence rate of a specific keyword with respect to all keywords may be used, or an advertisement may be displayed at the request of an enterprise which analyses information posted to a community.

### (Embodiment 7)

In a seventh embodiment, a method will be described in which, with respect a keyword and contents included in information posted to a community, a profile (preference information, personal information, etc.) of a user belonging to the community is referred, and explanation information is presented to a user who seems not to understand the contents and meaning.

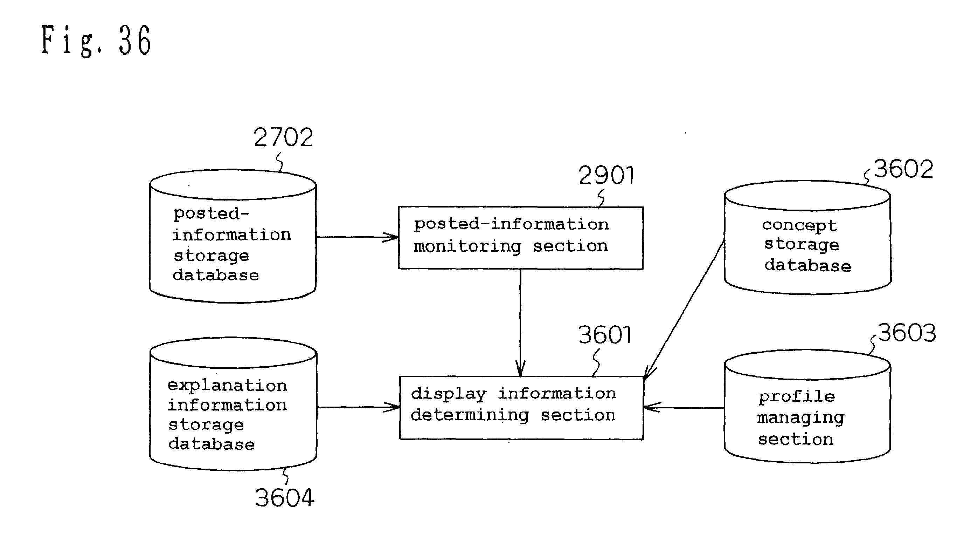

First, a configuration which is used in the embodiment is shown in Fig. 36.

In the figure, 3602 denotes a concept storage database which stores a conceptual structure of terms such as a word or a compound.

The reference numeral 3603 denotes a profile managing section which stores a personal profile such as preference information and personal information of a user belonging to a community.

The reference numeral 3601 denotes a display information determining section which extracts keywords such as a word and a compound from information posted to a community that is monitored by the posted-information monitoring section 2901, and which, with reference to the concept storage database 3602 and the profile managing section 3603, identifies a set of a user and a keyword in which the contents of the keyword is required to be explained.

The reference numeral 3604 denotes an explanation information storage database which stores a keyword such as a word or a compound with being paired with its explanation contents.

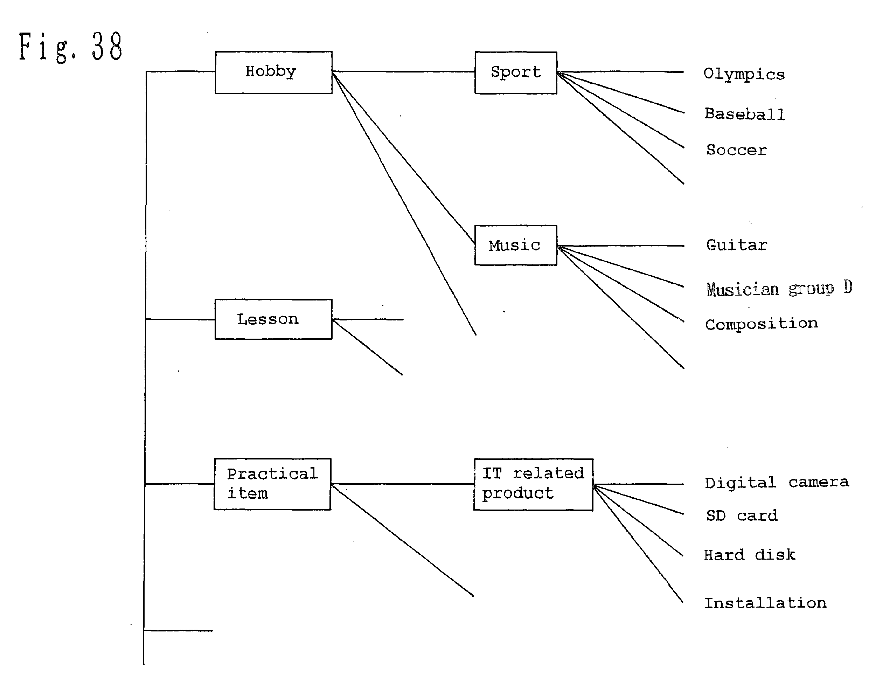

Fig. 38 shows an example of the concept storage database 3602. In this example, a concept is expressed by a tree structure, and configured by categories (terms each enclosed by a rectangle in the figure) and attributes (terms included in the lowest hierarchy in the figure). Categories such as "Hobby", "Lesson", and "Practical item" are in the same hierarchy. Lower-level categories of "Hobby" include "Sport", "Music", and the like, and categories belonging to "Sport" are "Olympics", "Baseball", etc. It is considered that both "Sport" and "Music" categories are narrower concepts of "Hobby" category, and therefore closely related to each other, but "IT related product" category is a narrower concept of "Practical item" category, and hence loosely related to "Sport" and "Music" categories which are narrower concepts of "Hobby" category.

Next, the procedure will be described by way of a specific example.

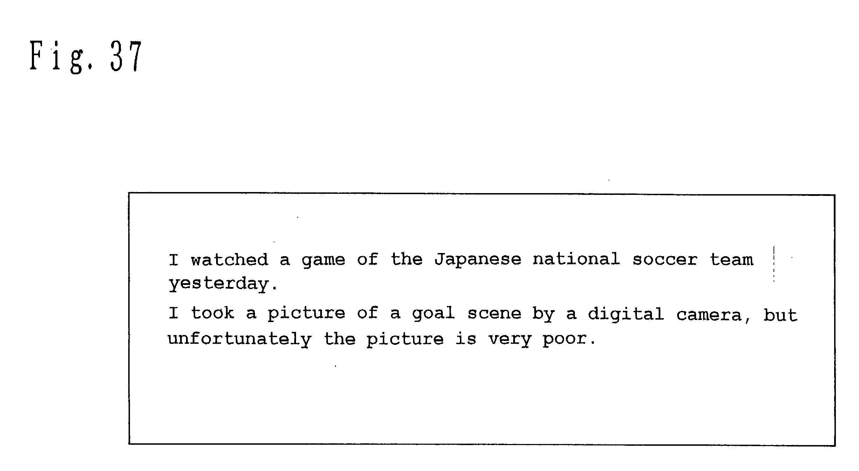

The posted-information monitoring section 2901 detects that information shown in Fig. 37 is posted to the community. With reference to the profile of member users of the community stored in the profile managing section 3603, and the concept storage database 3602, the display information determining section 3601 judges which user must be provided with detailed explanation information relating to one of the keywords.

Hereinafter, a method of judging whether it is required to present explanation information of a keyword to a user having a certain profile or not will be described.

It is assumed that a certain user presently has the profile shown in Fig. 10. From the attributes of the profile, it is considered that the user is interested in "Sport" category in the conceptual structure of Fig. 38, and has some knowledge of the category.

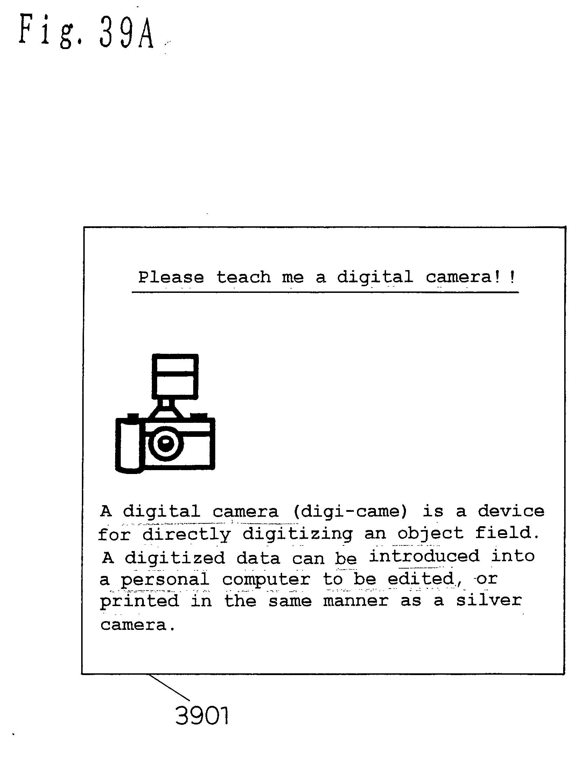

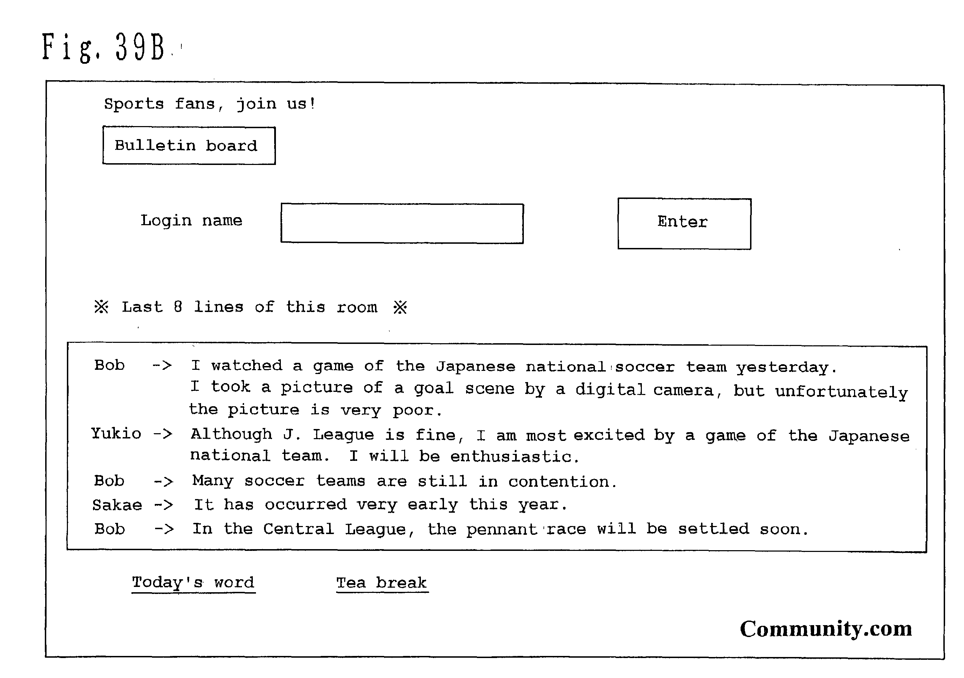

When words and compounds are extracted from the posted information of Fig. 37, for example, the extracted words and compounds include word "digital camera". Referring to the conceptual structure of Fig. 38, it is seen that "digital camera" belongs to "IT related product" category. At this time, the display information determining section 3601 judges that the user lacks knowledge of the categories belonging to "IT related product" category, because "IT related product" category to which "digital camera" belongs is loosely related to "Sport" category in which the user is interested. With respect to the user having the profile shown in Fig. 10, when information shown in Fig. 37 is posted, or when the user reads the information, information 3901 shown in Fig. 39A is presented to the user as explanation information of "digital camera". The information 3901 of Fig. 39A is stored in the explanation information storage database 3604.

The judgement is performed(on all the users belonging to the community. The information 3901 of Fig. 39A can be presented to a user who, judging from the profile, seems to lack knowledge of the posted keyword.

Explanation information such as shown in Fig. 39 may be displayed in a browser(Fig.39B) of a community which the user is reading, or in another window which is separately formed.

### (Embodiment 8)

In an eighth embodiment, a method of monitoring posted information of communities, and integrating communities in which views on similar concepts are exchanged, into one community will be described.

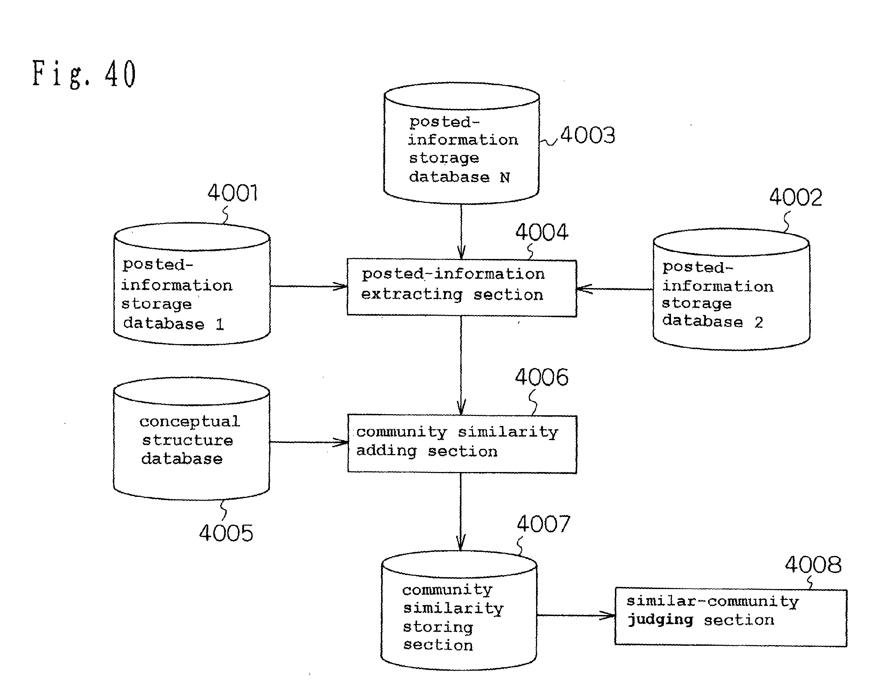

Fig. 40 is a view showing the configuration of the embodiment.

In the figure, 4001 to 4003 denote posted-information storage databases which store topics posted to community 1, community 2, and community N, respectively.

The reference numeral 4004 denotes a posted-information extracting section which refers the posted-information storage databases 4001 to 4003, and which extracts information posted to the communities.

The reference numeral 4005 denotes a conceptual structure database showing the conceptual structure of terms.

The reference numeral 4007 denotes a community similarity storing section which stores a similarity of information posted among the communities.

The reference numeral 4006 denotes a community similarity adding section which refers information posted to the communities obtained from the posted-information extracting section 4004, and also to the conceptual structure database 4005, and which adds the similarity among the communities stored in the community similarity storing section 4007.

The reference numeral 4008 denotes a similar-community judging section which determines similar communities on the basis of the similarity in the community similarity storing section 4007.

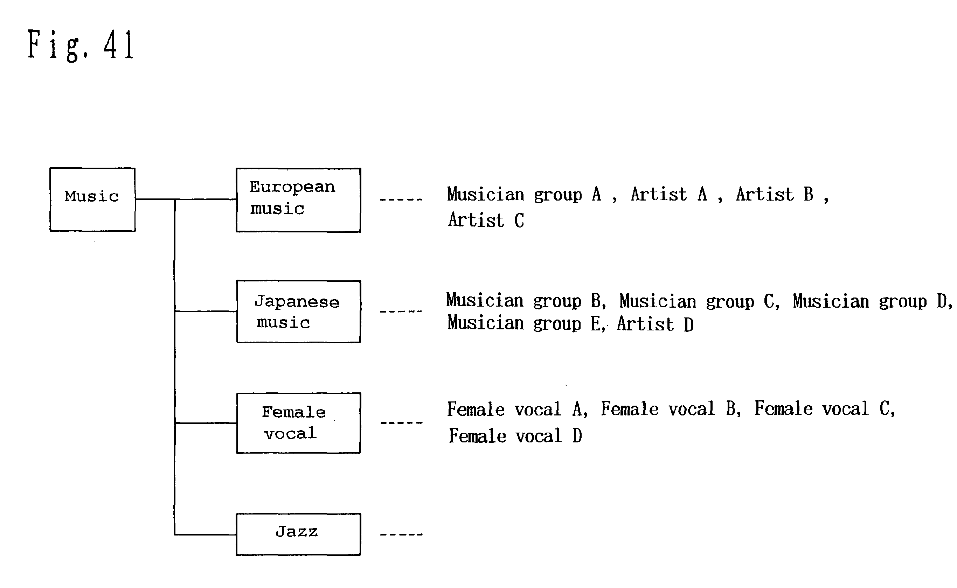

Fig. 41 shows an example of the conceptual structure stored in the conceptual structure database 4005.

As shown in the figure, the conceptual structure is expressed by a hierarchical structure of terms. Below "Music" concept, there are concepts of "European music", "Japanese music", "Female vocal", and "Jazz". In this example, it should be understood that each term enclosed by a rectangle indicates a community, for example, "Musician group B", "Musician group C", and the like are keywords featuring "Japanese music community".

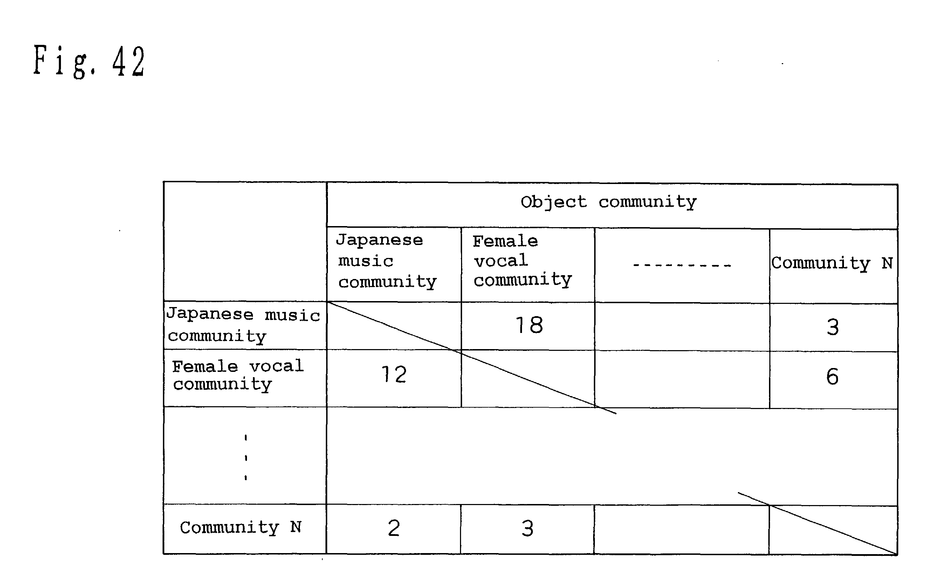

Fig. 42 shows an example of information stored in the community similarity storing section 4007.

The values in the figure indicate that, for example, keywords featuring "Female vocal community" shown in the conceptual structure of Fig. 41 occur 18 times in information which have been posted to "Japanese music community". Namely, in the past, keywords relating to "Female vocal community" were posted 18 times to "Japanese music community". As the values are larger, two communities are related more closely and the similarity is higher.

Next, the flow of the procedure in the embodiment will be described. It is assumed that the conceptual structure of Fig. 41 is employed as the conceptual structure database 4005, and the information of Fig. 42 is stored in the community similarity storing section 4007.

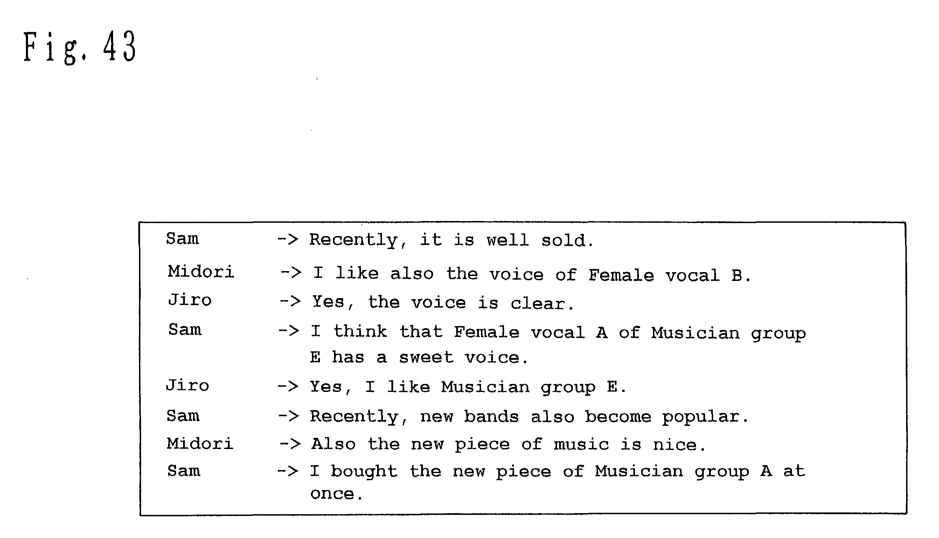

When information shown in Fig. 43 is posted to "Japanese music community", the posted-information extracting section 4004 extracts the information.

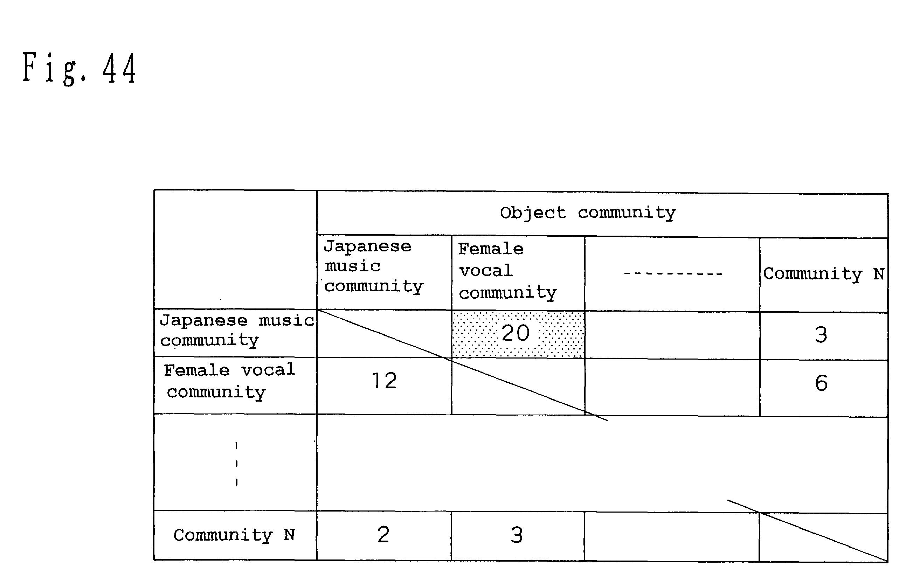

Referring to the community similarity adding section 4006 of Fig. 41, the community similarity adding section 4006 performs an addition of a similarity in each community. The information shown in Fig. 43 and posted to "Japanese music community" contains one keyword "Female vocal A", and one keyword "Female vocal B" which are related to "Female vocal community", and hence the similarity of "Japanese music community" with respect to "Female vocal community" is incremented by "2", so that the data of the community similarity storing section 4007 of Fig. 42 is changed from "18" to "20" as shown in Fig. 44.

The similar-community judging section 4008 monitors the community similarity storing section 4007, and judges whether there is a community which satisfies a criterion for community integration or not. For example, it may be set as the judgement criterion that "the similarity between communities stored in the community similarity storing section 4007 is "20" or more".

In Fig. 44, the similarity between "Japanese music community" and "Female vocal community" satisfies the above-mentioned criterion. Therefore, the similar-community judging section 4008 determines that "Japanese music community" and "Female vocal community" are to be integrated with each other.

Preferably, integration of communities is informed to members belonging to the communities.

### (Embodiment 9)

In a ninth embodiment, a method of monitoring information posted to a certain community, and independently creating a new community from an existing community in accordance with the contents of the posted information.

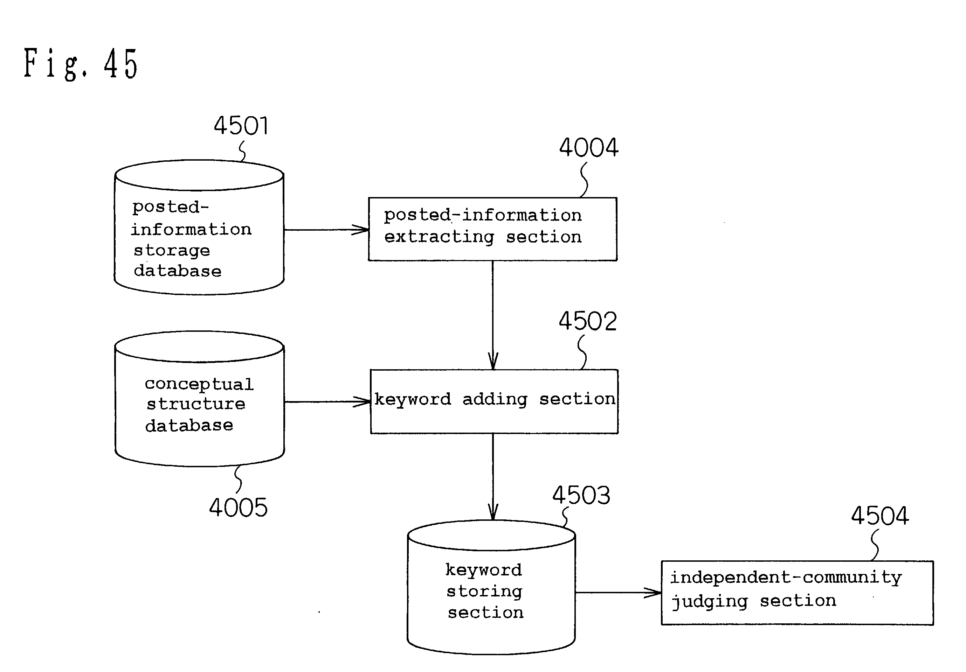

Fig. 45 is a view showing the configuration of the embodiment.

In the figure, 4501 denotes a posted-information storage database.

The reference numeral 4503 denotes a keyword storing section which, for each member of a community, stores a keyword included in information posted to the community, and the number of postings of the keyword.

The reference numeral 4502 denotes a keyword adding section which extracts a keyword from information posted to the community and extracted by the posted-information extracting section 4004, and which causes the keyword storing section 4503 to increment the number of postings of the keyword.

The reference numeral 4504 denotes an independent-community judging section which monitors the keyword storing section 4503, and which judges whether, in accordance with the number of postings of the keyword, an independent community is to be newly created or not.

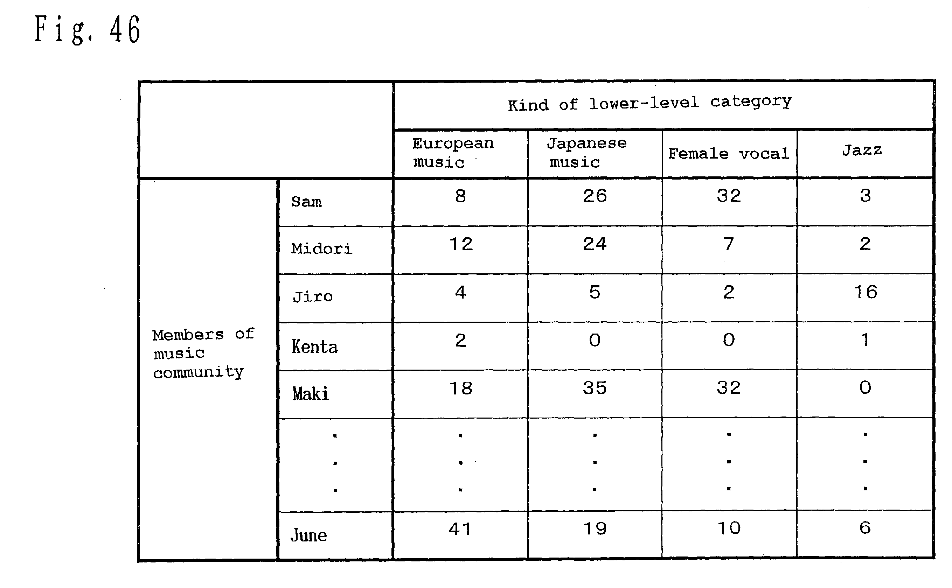

Fig. 46 shows a specific example of the keyword storing section 4503.

As shown in the figure, in the keyword storing section 4503, management is conducted in the unit of each of members belonging to "Music community" in the conceptual structure database 4005 of Fig. 41, and the numbers of postings of keywords (shown in Fig. 41) featuring "European music", "Japanese music", and "Female vocal" which are narrower concepts of "Music community" are stored for each of the members. For example, it is shown that a member of "Music community", "Jiro" has posted 4 times a sentence including a keyword such as "Musician group A", "Artist A", or the like belonging to "European music" concept.

Next, the flow of the procedure in the embodiment will be described.

It is assumed that "Music community" currently exists and members belonging to the community are shown in the keyword storing section 4503 of Fig. 46.

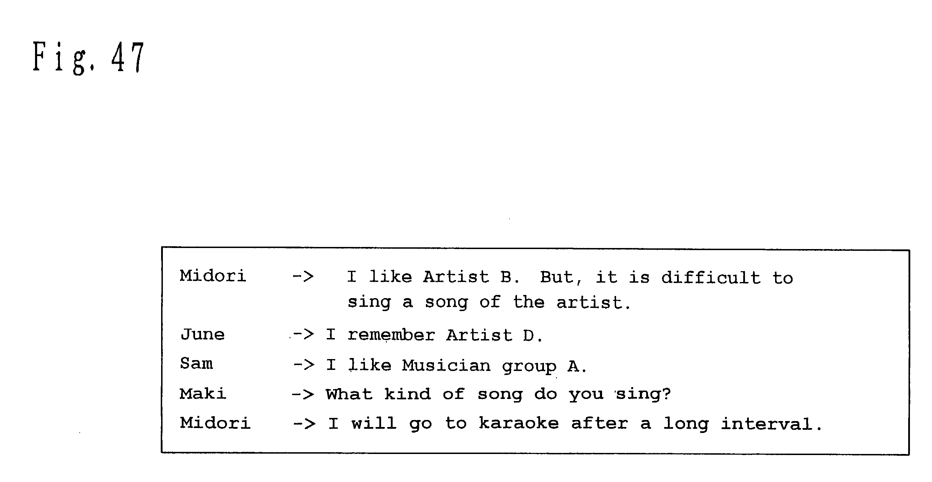

When sentences shown in Fig. 47 are posted to the posted-information storage database 4501, the posted-information extracting section 4004 extracts the information, and then transmits it to the keyword adding section 4502.

Referring to the conceptual structure database 4005 of Fig. 41, the keyword adding section 4502 judges whether or not each of the members posts the keywords of the concepts of "European music", "Japanese music", "Female vocal", and "Jazz" which are included in "Music community".

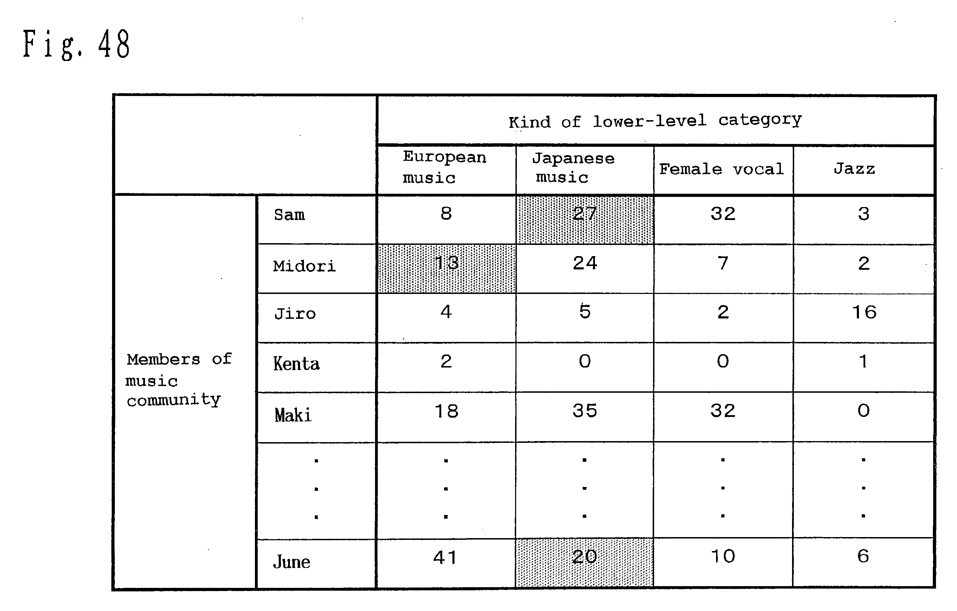

In this example, keywords such as "Artist B" of member "Midori", "Artist D" of "June", and "Musician group B" of "Sam" are judged as keywords corresponding to the concepts. Each of the numbers of keywords in the keyword storing section 4503 of Fig. 46 and for these members is incremented by one, so as to become as shown in Fig. 48.

When the numbers of keywords in the keyword storing section 4503 are incremented, the independent-community judging section 4504 refers the keyword storing section 4503, and judges whether there is a community which is to be newly separated from "Music community" that is an existing community or not. For example, the judgment criterion may be set as follows.

"If the number of members who belong to community A, and who have posted a predetermined number or more times keywords relating to narrower concept B of concept A expressing community A is equal to or larger than a given number, new community B related to concept B is configured by the members."

In the criterion, for example, "predetermined number of times" may be set to 20 times, and "given number of members" to 4 members. In this case, in the keyword storing section 4503 which is updated as shown in Fig. 48, "Japanese music" satisfies the criterion. Therefore, the independent-community judging section 4504 determines that a new community, "Japanese music community" configured by "Sam", "Midori", "Maki", and "June" who are members satisfying the above-mentioned criterion is to be created.

The members may be set so as to belong to only new "Japanese music community", or alternatively to the two communities of "Japanese music community" and "Music community".

In the embodiment, as in the example of Fig. 41, "European music" and "Japanese music" with respect to "Music", i.e., narrower concepts of an existing community are used as candidates for a community which is to become independent. Not only concepts in the relationship of "parent and child", but also different concepts may be used as candidates for an independent community.

In the above embodiments, the case where information terminals (corresponding to the terminal apparatus in the invention) collect and generate preference information of the users, and the like has been mainly described. The invention is not restricted to this case. For example, a configuration may be employed in which the collection and generation are performed by a server (the community server 106 of Fig. 1) connected to the Internet.

In the above embodiments, the case where the group forming apparatus of the invention is realized by the single community server 106 has been mainly described. The apparatus is not restricted to this. For example, the apparatus may be configured by a combination of plural servers or data processing apparatuses.

The invention provides a program which causes a computer to realize functions of a whole or a part of the means (or the apparatuses, the elements, the circuits, the sections, and the like) of the group forming system and the group forming apparatus of the invention, and which cooperates with the computer.

Moreover, the invention provides a program which causes a computer to perform operations of a whole or a part of the steps (or the processes, the operations, the functions, and the like) of the group forming method of the invention, and which cooperates with the computer.

Moreover, the invention provides a medium which carries a program for causing a computer to realize functions of a whole or a part of the means of the group forming system and the group forming apparatus of the invention, the program being computer-readable and, when read, cooperating with the computer to realize the functions.

Moreover, the invention provides a medium which carries a program for causing a computer to perform operations of a whole or a part of the steps of the group forming method of the invention, the program being computer-readable and, when read, cooperating with the computer to perform the operations.

The part of the means (or the apparatuses, the elements, the circuits, the sections, and the like) in the invention, or the part of the steps (or the processes, the operations, the functions, and the like) in the invention implies several of the plural means or steps, or a part of functions or operations in one means or step.

Also a recording medium on which the program of the invention is recorded, and which is readable by a computer is included with the scope of the invention.

One of forms of using the program of the invention may be a mode in which the program is transmitted through a transmission medium to be read by a computer, and cooperates with the computer.

The recording medium includes a ROM and the like, and the transmission medium includes transmission media such as the Internet, and light, a radio wave, a sound wave, etc.

In the invention, the computer is not restricted to pure hardware such as a CPU, and may include firmware, an OS, and peripheral equipment.

As described above, the configuration of the invention may be realized by means of software or hardware.

As apparent from the above description, according to the invention, a user who wishes to join a community can automatically find an adequate community on the basis of preference information of the user, without taking the trouble of searching a community suitable to the user by using a search engine or the like. Even when a community is not suitable for a user, it is possible to automatically find another community. In a case such as that a community is not activated, community reorganization can be conducted automatically or without requiring manpower.

On the other hand, an enterprise which intends to provide a community with a service or a product can provide advertisement information to a user at an appropriate timing, or adequately display a descriptive text or image to a user who is difficult to understand information posted to community, without consuming labor of always monitoring views and information which are exchanged in the community.

In the embodiments, the preference information may include information on a purchase of an article.

As apparent from the above description, the invention has an advantage that formation, operation, and activation of a community on the Internet or the like can be performed more easily than the conventional art.

## Claims

1. A group forming system comprising:
a terminal apparatus which is connected to a network;
accumulating means of obtaining information including at least one of personal information and preference information of a user of said terminal apparatus, and of accumulating the obtained information;
classifying means of classifying a whole or a part of the information accumulated in said accumulating means, into a single or plural groups on the basis of a predetermined classification criterion; and
determining and notifying means of determining the group to which the user is to belong, from the classified groups on the basis of predetermined relationships between the user and the accumulated information, and of notifying the user of a result of the determination.

2. A group forming apparatus comprising:
accumulating means of obtaining information including at least one of personal information and preference information of a user of a terminal apparatus which is connected to a network, and of accumulating the obtained information;
classifying means of classifying a whole or a part of the information accumulated in said accumulating means, into a single or plural groups on the basis of a predetermined classification criterion; and
determining and notifying means of determining the group to which the user is to belong, from the classified groups on the basis of predetermined relationships between the user and the accumulated information, and of notifying the user of a result of the determination.

3. A group forming apparatus according to claim 2, wherein said apparatus further comprises activity judging means of judging a degree of activity of the group on the basis of a history and/or a frequency of postings of information to the group from the user belonging to the group, and
from a result of the judgement, it is determined whether a whole or a part of the classification is reorganized or not, in accordance with the degree of activity of the group.

4. A group forming apparatus according to claim 2, wherein said apparatus further comprises:
keyword judging means of judging whether or not a preregistered keyword is included in information which is posted to the group from the user belonging to the group; and
provided information providing means of, if a result of the judgement shows that the keyword is included, providing provided information which is previously stored with being paired with the keyword, to the group or the user posting the information to the group, on the basis of a predetermined criterion.

5. A group forming apparatus according to claim 2, wherein said apparatus further comprises monitoring means of monitoring plural sets of information which are posted to the group from the user belonging to the group, and
in accordance with similarity of the plural sets of monitored information, the group is divided, or plural groups are integrated with each other.

6. A group forming apparatus according to claim 2, wherein said apparatus further comprises:
advertisement content storing means of storing an advertisement content for providing an advertisement to the group, and conditions for the provision in correspondence with one another;
history/frequency storing means of storing a history and/or a frequency of information posted to the group from the user belonging to the group; and
advertisement content providing means of searching contents stored in said history/frequency storing means for contents satisfying the conditions, and of providing the corresponding advertisement content to a user belonging to the group, or the group.

7. A group forming method comprising:
an accumulating step of obtaining information including at least one of personal information and preference information of a user of a terminal apparatus, and of accumulating the obtained information;
a classifying step of classifying a whole or a part of the accumulated information into a single or plural groups on the basis of a predetermined classification criterion; and
a determining and notifying step of determining a group to which the user is to belong, from the classified groups on the basis of predetermined relationships between the user and the accumulated information, and of notifying the user of a result of the determination.

8. A group forming method according to claim 7, wherein, in said accumulating step, also information related to the classified groups is accumulated, and
in said classifying step, the classification is performed in consideration of also the accumulated information related to the groups.

9. A group forming method comprising:
a storing step of storing personal information or preference information of a user belonging to a group which is formed on Internet, with classifying the information into first information which shows a stable tendency for a predetermined time period, and second information which, for the predetermined time period, shows a degree of change in tendency that is larger than a degree of change in tendency of the first information;
a classification result obtaining step of, on the basis of a first classification criterion, classifying a whole or a part of information including the first information in the stored information, into a single or plural groups to obtain a first classification result, and of, on the basis of a second classification criterion, classifying a whole or a part of information including the second information, into a single or plural groups to obtain a second classification result; and
a determining and notifying step of determining the group by using the first classification result, of determining the group by using the second classification result, and of notifying the user of results of the determinations.

10. A group forming method comprising:
an activity judging step of judging a degree of activity of a group which is formed on Internet, on the basis of a history and/or a frequency of postings of information to the group from a user belonging to the group;
a determining step of, from a result of the judgement, determining whether a whole or a part of single or plural groups is reorganized or not, in accordance with the degree of activity of the group; and
a reorganizing step of reorganizing the groups on the basis of a result of the determination.

11. A group forming method comprising:
a judging step of judging whether or not a preregistered keyword is included in information which is posted to a group that is formed on Internet; and
a providing step of, if a result of the judgement shows that the keyword is included, providing prbvided information which is previously stored with being paired with the keyword, to the group or a user posting the information to the group, on the basis of a predetermined criterion.

12. A group forming method according to claim 11, wherein the provision of the provided information on the basis of the predetermined criterion includes the steps of: on the basis of at least one of personal information and preference information of a user belonging to the group, judging whether the user has known the keyword or not; and, if it is judged that the user has not yet known the keyword, providing the provided information.

13. A group forming method comprising:
a monitoring step of monitoring plural sets of information posted to a group which is formed on Internet; and
a step of, in accordance with similarity of the plural sets of information, automatically dividing a mass, or integrating plural masses together.

14. A group forming method comprising the steps of:
previously storing an enterprise which wishes to display an advertisement to a mass, an advertisement content which the enterprise wishes to display, and conditions for displaying the advertisement with being paired with each other;
storing a history of information posted to a group which is formed on Internet; and
if the history of posted information satisfies the conditions for displaying the advertisement, providing the advertisement content to the group.

15. A group forming method according to claim 14, wherein the history of posted information is stored in the form of a pair of a keyword and the number of postings of the keyword.

16. A group forming method according to claim 14, wherein the condition is a keyword and a lower limit of the number of postings of the keyword to the group,
the history of posted information is stored in the form of a pair of a keyword and the number of postings of the keyword, and
satisfaction of the condition is that a keyword which is the history of posted information and the number of postings of the keyword satisfy the condition.

17. A program for causing a computer to function as a whole or a part of said accumulating means, said classifying means, and said determining and notifying means of said group forming apparatus according to claim 2.

18. A program for causing a computer to perform a whole or a part of said steps of said group forming method according to any one of claims 7 to 16.

19. A medium which carries a program for causing a computer to function as a whole or a part of said accumulating means, said classifying means, and said determining and notifying means of said group forming apparatus according to claim 2, said medium being processable by a computer.

20. A medium which carries a program for causing a computer to perform a whole or a part of said steps of said group forming method according to any one of claims 7 to 16, said medium being processable by a computer.
